# EUROPEAN PATENT APPLICATION

(11) **EP 4 672 459 A1**
(43) Date of publication of application: **31.12.2025**
(21) Application number: 23948959.4
(22) Date of filing: 19.09.2023
(51) Int. Cl.: H01M 50/244, H01M 50/204, H01M 50/249, H01M 50/289, H01M 50/317

(54) **BATTERY CELL, BATTERY, ELECTRIC DEVICE, AND SUPPORT**

(30) Priority: 17.08.2023 CN 202322215823 U
(71) Applicant: Contemporary Amperex Technology Co., Limited, Ningde, Fujian 352100 (CN)
(72) Inventor: WANG, Tingting, Ningde, Fujian 352100 (CN)
(74) Representative: Gong, Jinping
(86) International application number: PCT/CN2023/119690
(87) International publication number: WO 2025/035534

(57) **Abstract**

The present application discloses a battery cell, a battery, a power consuming apparatus, and a bracket. The battery cell includes: a housing, provided with an explosion-proof valve; an electrode assembly, arranged in the housing; and a bracket, including a bracket body and a first abutting portion. The bracket body has a first side and a second side that are arranged opposite to each other, an exhaust hole is provided on the bracket body, and the exhaust hole is configured to be opposite to the explosion-proof valve. The first abutting portion is arranged on the first side and is configured to abut against an end portion of the electrode assembly, so that the exhaust hole and the end portion of the electrode assembly jointly form a first exhaust channel. In the technical solutions of the embodiments of the present application, an exhaustion capability is improved, a risk that a battery cell burns and explodes is reduced, and an impact on an adjacent battery cell is reduced, thereby helping improve use reliability and stability of a battery.

## Description

### CROSS-REFERENCE TO RELATED APPLICATIONS

The present application claims priority to Chinese Patent Application No. 202322215823.3 filed on August 17, 2023, which is incorporated herein by reference in its entirety.

### TECHNICAL FIELD

The present application relates to the field of batteries, and specifically to a battery cell, a battery, a power consuming apparatus, and a bracket.

### BACKGROUND

Energy saving and emission reduction are the key to the sustainable development of the automobile industry. Electric vehicles have become an important part of the sustainable development of automotive industry due to their advantages of energy saving and environmental protection. For the electric vehicles, the battery technology is an important factor for their development. In the related art, reliability of a battery cell is to be improved, which hinders further improvement of reliability of a battery.

### SUMMARY

In view of the foregoing problem, the present application provides a battery cell, a battery, and a power consuming apparatus, which have higher reliability, and help improve use reliability and stability of the battery.

According to a first aspect, the present application provides a battery cell, including: a housing, an electrode assembly, and a bracket. An explosion-proof valve is arranged in the housing. The electrode assembly is arranged in the housing. The bracket includes a bracket body and a first abutting portion. The bracket body has a first side and a second side that are arranged opposite to each other in a thickness direction of the bracket body. An exhaust hole that extends through the first side and the second side is provided on the bracket body, and the exhaust hole is configured to be opposite to the explosion-proof valve. The first abutting portion is arranged on the first side and protrudes in a direction away from the second side, and is configured to abut against an end portion of the electrode assembly, so that the exhaust hole and the end portion of the electrode assembly jointly form a first exhaust channel.

In the technical solution of this embodiment of the present application, the first abutting portion is arranged on the first side of the bracket body, and the first abutting portion abuts against the end portion of the electrode assembly. This can increase a distance between the first side of the bracket body and the end portion of the electrode assembly, that is, increase a distance between the exhaust hole and the end portion of the electrode assembly, so that the first exhaust channel in communication with the exhaust hole is defined between the first side of the bracket body and the end portion of the electrode assembly, to improve an exhaustion capability. When thermal runaway tends to occur in the battery cell, generated gas may first enter the first exhaust channel, then pass through the bracket through the exhaust hole, and finally may be discharged from the explosion-proof valve, to implement rapid pressure relief, so that a risk that the battery cell burns and explodes can be reduced, and an impact on an adjacent battery cell can be reduced, thereby helping improve use reliability and stability of a battery.

In some embodiments, a gas passage gap that extends through the first side and the second side is provided in a circumferential direction of the bracket, the gas passage gap and the housing jointly form a gas passage channel, and the gas passage channel is in communication with the first exhaust channel. In the technical solution, the gas passage gap is provided on the bracket, and the gas passage gap and the housing may define the gas passage channel, so that gas generated in a circumferential direction of the electrode assembly can move to a position of the explosion-proof valve through a gas passage channel at a corresponding position in a short time, to improve timeliness of pressure relief of the explosion-proof valve. In addition, gas in the first exhaust channel may flow to the exhaust hole and the gas passage channel respectively in a short time, to implement instantaneous pressure relief, and finally may be discharged from the explosion-proof valve, to implement final pressure relief, so as to further reduce the risk that the battery cell burns and explodes and improve the use reliability and stability of the battery. Moreover, during injection, an electrolyte solution may flow to the electrode assembly through the gas passage gap, to shorten infiltration time and improve infiltration efficiency.

In some embodiments, a plurality of gas passage gaps arranged at intervals are provided in the circumferential direction of the bracket, each gas passage gap and the housing jointly form one gas passage channel, and a plurality of gas passage channels are provided around a circumferential direction of the first exhaust channel. The plurality of gas passage gaps are provided, the plurality of gas passage channels may be defined, and a part of the gas in the first exhaust channel spreads in all directions, may pass through the bracket through the plurality of gas passage channels, and finally may be discharged from the explosion-proof valve. This can greatly reduce the risk that the battery cell burns and explodes and greatly improve the use reliability and stability of the battery. During injection, the electrolyte solution may flow to the electrode assembly through the plurality of gas passage gaps, to further shorten the infiltration time and greatly improve the infiltration efficiency.

In some embodiments, a first extending portion further protrudes on the first side of the bracket body, the first extending portion is arranged around a circumferential direction of the bracket body and defines a matching groove with the bracket body, and the end portion of the electrode assembly is arranged in the matching groove. In the technical solution, the first extending portion may be arranged, to restrict one end of the electrode assembly, so that stability of the electrode assembly during shaking of the battery cell is improved, a probability that an outer layer of an active material coating portion of the electrode assembly is in a fluffy state is reduced, and one end of the electrode assembly is further protected, to alleviate a problem that one end of the electrode assembly touches the housing. Therefore, occurrence of a phenomenon that the electrode assembly is scratched by the housing is reduced, and use reliability of the battery cell is improved.

In some embodiments, the gas passage gap extends through the first extending portion and the bracket body. The formed gas passage channel passes through two sides of the bracket in a thickness direction and is in communication with the first exhaust channel and the explosion-proof valve. The gas in the first exhaust channel may flow to the exhaust hole and the gas passage channel respectively in a short time, to implement instantaneous pressure relief, and finally may be discharged from the explosion-proof valve, to implement final pressure relief, so as to further reduce the risk that the battery cell burns and explodes and improve the use reliability and stability of the battery.

In some embodiments, the first extending portion and the first abutting portion are spaced away, and jointly form a first flow guide channel, and the first flow guide channel is in communication with at least one gas passage channel and the first exhaust channel. The first flow guide channel may increase a space occupied by an exhaust path, to help improve the exhaustion capability, and may also play a guiding function, so that a part of gas entering the first exhaust channel may flow to the gas passage channel along the first flow guide channel, and the gas passes through the bracket through the gas passage channel and finally may be discharged from the explosion-proof valve, to implement pressure relief, so as to further reduce the risk that the battery cell burns and explodes and improve the use reliability and stability of the battery. In addition, the first flow guide channel may guide flow of the electrolyte solution, to further shorten the infiltration time and greatly improve the infiltration efficiency.

In some embodiments, in a length direction of the battery cell, there are a plurality of gas passage gaps on both sides of the exhaust hole, and a plurality of gas passage gaps located on a same side of the exhaust hole share one first flow guide channel. In the technical solution, the gas entering the first exhaust channel may flow to two sides of the exhaust hole in the length direction of the battery cell under the guidance of the two first flow guide channels, to implement instantaneous pressure relief, then pass through the bracket through the plurality of gas passage channels, and finally may be discharged from the explosion-proof valve, to implement final pressure relief, so as to further reduce the risk that the battery cell burns and explodes and improve the use reliability and stability of the battery. During injection, the electrolyte solution may flow under the guidance of the two first flow guide channels, to shorten the infiltration time and improve the infiltration efficiency.

In some embodiments, the first abutting portion is arranged in an arc shape, there are two first abutting portions, the two first abutting portions are respectively located on two sides of the exhaust hole, and the plurality of gas passage gaps located on the same side of the exhaust hole are provided at intervals around a circumferential direction of a corresponding first abutting portion. In the technical solution, the first abutting portion may be arranged in the arc shape, to reduce a probability of compression damage to the end portion of the electrode assembly caused by the bracket. In addition, the first abutting portion and the first extending portion may define the first flow guide channel arranged in an arc shape, to increase a space occupied by the first flow guide channel, so that all the plurality of gas passage gaps located on the same side of the exhaust hole are in communication with the first flow guide channel, to improve space utilization of the bracket and further improve the exhaustion capability. In addition, the infiltration time can be further shortened, and the infiltration efficiency can be further improved.

In some embodiments, a positive terminal and a negative terminal are further arranged on a wall of the housing on which the explosion-proof valve is arranged, two through holes exposing the positive terminal and the negative terminal are provided on the bracket body, and the exhaust hole is located between the two through holes. The two first abutting portions are arranged in one-to-one correspondence with the two through holes, and each first abutting portion is arranged around an outer periphery of a corresponding through hole. In the technical solution, the two through holes may be provided on the bracket body, to avoid the positive terminal and the negative terminal, so that the positive terminal and the negative terminal may be connected to corresponding conductive portions of the electrode assembly. The first abutting portion is arranged around an outer periphery of a corresponding through hole, so that the first abutting portion and the first extending portion may define the first flow guide channel arranged in the arc shape, to increase the space occupied by the first flow guide channel, improve the space utilization of the bracket, and also improve the exhaustion capability. In addition, the first abutting portion may guide gas at the through hole to flow to the first exhaust channel, so that the part of gas may pass through the bracket through the exhaust hole as much as possible, to further improve the exhaustion capability.

In some embodiments, a second abutting portion protruding in a direction away from the first side is arranged on the second side of the bracket body, the second abutting portion is configured to abut against the wall of the housing on which the explosion-proof valve is arranged, and the second abutting portion and the wall jointly form a second exhaust channel. The second exhaust channel is in communication with at least one gas passage channel. In the technical solution, the second abutting portion is arranged on the second side of the bracket body, and the second abutting portion abuts against the wall of the housing on which the explosion-proof valve is arranged, so that the second exhaust channel in communication with the gas passage channel is defined between the second side of the bracket body and the wall of the housing, to increase the space occupied by the exhaust path, improve the exhaustion capability, reduce the risk that the battery cell burns and explodes, reduce the impact on the adjacent battery cell, and help improve the use reliability and stability of the battery.

In some embodiments, a second extending portion further protrudes on the second side of the bracket body, the second extending portion and the second abutting portion are spaced away, and jointly form a second flow guide channel, and the second flow guide channel is in communication with at least one gas passage channel and the second exhaust channel. The second flow guide channel may increase the space occupied by the exhaust path, to help improve the exhaustion capability, and may also play a guiding function, so that a part of gas passing through the bracket through the gas passage channel may flow to the second exhaust channel along the second flow guide channel and finally may be discharged from the explosion-proof valve, to implement pressure relief, so as to further reduce the risk that the battery cell burns and explodes and improve the use reliability and stability of the battery. In addition, the second flow guide channel may guide flow of the electrolyte solution, to further shorten the infiltration time and greatly improve the infiltration efficiency.

In some embodiments, in the length direction of the battery cell, there are a plurality of gas passage gaps on both sides of the exhaust hole, and a plurality of gas passage gaps located on a same side of the exhaust hole share one second flow guide channel. In the technical solution, the gas passing through the bracket may flow to the second exhaust channel located in the middle under the guidance of the second flow guide channel, and finally may be discharged from the explosion-proof valve, to implement final pressure relief, so as to further reduce the risk that the battery cell burns and explodes and improve the use reliability and stability of the battery. The electrolyte solution may flow to the plurality of gas passage gaps under the guidance of the second flow guide channel, to shorten the infiltration time and improve the infiltration efficiency.

In some embodiments, the second side has a mounting recessed portion recessed toward the first side, the second exhaust channel is defined between the mounting recessed portion and the wall of the housing on which the explosion-proof valve is arranged, and the exhaust hole is provided on a bottom wall of the mounting recessed portion. In the technical solution, the mounting recessed portion may be arranged on the second side of the bracket body, to increase a distance between the wall of the housing on which the explosion-proof valve is arranged and the exhaust hole, increase the space occupied by the exhaust path, and improve the exhaustion capability, so as to further reduce the risk that the battery cell burns and explodes, reduce the impact on the adjacent battery cell, and help improve the use reliability and stability of the battery.

In some embodiments, a gas passage hole is provided on a side wall of the mounting recessed portion, and the gas passage hole is in communication with the second flow guide channel and the second exhaust channel. The gas in the second flow guide channel may flow to the second exhaust channel through the gas passage hole, and finally may be discharged from the explosion-proof valve, to implement pressure relief, so as to reduce the risk that the battery cell burns and explodes, reduce the impact on the adjacent battery cell, and help improve the use reliability and stability of the battery.

In some embodiments, the second abutting portion is arranged in an arc shape, there are two second abutting portions, the two second abutting portions are respectively located on two sides of the exhaust hole, and the plurality of gas passage gaps located on the same side of the exhaust hole are provided at intervals around a circumferential direction of a corresponding second abutting portion. In the technical solution, the second abutting portion is arranged in the arc shape, the plurality of gas passage gaps located on the same side of the exhaust hole are provided at intervals around the circumferential direction of the corresponding second abutting portion, and the second flow guide channel arranged in an arc shape may be defined, to increase a space occupied by the second flow guide channel, improve the space utilization of the bracket, and further improve the exhaustion capability. In addition, the infiltration time can be further shortened, and the infiltration efficiency can be further improved.

In some embodiments, a positive terminal and a negative terminal are further arranged on a wall of the housing on which the explosion-proof valve is arranged, two through holes exposing the positive terminal and the negative terminal are provided on the bracket body, and the exhaust hole is located between the two through holes. The two second abutting portions are arranged in one-to-one correspondence with the two through holes, and each second abutting portion is arranged around an outer periphery of a corresponding through hole. In the technical solution, the two through holes may be provided on the bracket body, to avoid the positive terminal and the negative terminal, so that the positive terminal and the negative terminal may be connected to corresponding conductive portions of the electrode assembly. The second abutting portion is arranged around an outer periphery of a corresponding through hole, so that the second abutting portion and the second extending portion may define the second flow guide channel arranged in the arc shape, to increase the space occupied by the second flow guide channel, improve the space utilization of the bracket, and also improve the exhaustion capability. In addition, backflow of the gas from the through hole can be reduced.

In some embodiments, a positioning groove is provided on a hole wall of the through hole and is configured to match the positive terminal or the negative terminal. The positioning groove is provided, to help improve reliability of a connection between the positive terminal or the negative terminal and the bracket, and the positioning groove can also accelerate flow of the electrolyte solution, to shorten the infiltration time and improve the infiltration efficiency.

In some embodiments, there are at least two electrode assemblies, the at least two electrode assemblies are stacked, and at least one gas passage gap is arranged opposite to a middle position of two adjacent electrode assemblies. In the technical solution, at least one gas passage gap is arranged opposite to a middle position of two adjacent electrode assemblies, and gas between the two adjacent electrode assemblies may rapidly flow from the first side of the bracket body to the second side of the bracket body through the gas passage gap, and then flow to the position of the explosion-proof valve, to improve timeliness of pressure relief of the explosion-proof valve and improve the use reliability and stability of the battery.

In some embodiments, a terminal is further arranged on a wall of the housing on which the explosion-proof valve is arranged, the terminal is at least one of the positive terminal and the negative terminal, a through hole exposing the terminal is provided on the bracket body, and an accommodating portion in communication with the through hole is arranged on the terminal. The electrode assembly includes an active material coating portion and a conductive portion connected to the active material coating portion, the bracket is supported on an end portion of the active material coating portion on which the conductive portion is arranged, and at least a part of the conductive portion passes through the through hole and then extends into the accommodating portion to connect to the terminal. Because the accommodating portion is arranged on the terminal, a hollow structure of the accommodating portion can reduce a weight of the terminal to a certain extent, to improve gravimetric energy density of the battery cell and the battery. In addition, the conductive portion can be accommodated in the accommodating portion, to improve assembly efficiency of the conductive portion, further reduce a space occupied by the conductive portion, and fully use a space of the battery cell, so that both matching between the bracket and the terminal and matching between the bracket and the conductive portion are tighter and more reliable, and a structure of the battery cell is more compact, thereby helping improve energy density of the battery cell.

In some embodiments, the accommodating portion includes a first accommodating groove, a surface on a side of the terminal facing the active material coating portion is a terminal inner end surface, an opening of the first accommodating groove is formed on the terminal inner end surface, and at least a part of the conductive portion is accommodated in the first accommodating groove. In the technical solution, the first accommodating groove is provided on the terminal to reduce the weight of the terminal to a certain extent, so as to improve the gravimetric energy density of the battery cell and the battery. In addition, because the opening of the first accommodating groove is formed on the terminal inner end surface, and the terminal inner end surface is the surface on the side of the terminal close to the active material coating portion, so that the first accommodating groove may open in a direction toward the active material coating portion, so as to facilitate extending of the conductive portion into the first accommodating groove, and improve the assembly efficiency. In addition, the first accommodating groove in this form is easy to be processed, and production efficiency is improved.

In some embodiments, the accommodating portion includes a second accommodating groove, a surface on a side of the terminal away from the active material coating portion is a terminal outer end surface, an opening of the second accommodating groove is formed on the terminal outer end surface, the second accommodating groove is in communication with an interior of the housing through a via hole, and the conductive portion passes through the via hole and at least a part of the conductive portion is accommodated in the second accommodating groove. In the technical solution, the second accommodating groove is provided on the terminal to reduce the weight of the terminal to a certain extent, so as to improve the gravimetric energy density of the battery cell and the battery. In addition, because the opening of the second accommodating groove is formed on the terminal outer end surface, and the terminal outer end surface is the surface on the side of the terminal away from the active material coating portion, the second accommodating groove may open in a direction away from the active material coating portion. In this way, when at least a part of the conductive portion is accommodated in the second accommodating groove, the conductive portion can be easily accommodated and arranged through the opening of the second accommodating groove, and an electrical connection operation and the like may be easily performed on the conductive portion and the terminal through the opening of the second accommodating groove, thereby reducing production difficulty of the battery cell and improving the production efficiency of the battery cell.

In some embodiments, there are two terminals, the two terminals are respectively the positive terminal and the negative terminal, there are two through holes, and the two through holes respectively expose the positive terminal and the negative terminal. In a process of assembling the electrode assembly into the housing, two conductive portions of the electrode assembly may simultaneously and respectively pass through the two through holes on the bracket, so that the two conductive portions are conveniently and respectively connected to the positive terminal and the negative terminal, thereby improving the production efficiency.

In some embodiments, the battery cell further includes an insulating member, the insulating member is connected to the bracket, and the insulating member and the bracket jointly wrap around a circumferential direction of the electrode assembly. The insulating member may be configured to isolate an electrical connection component inside the housing from the housing, to reduce a risk of a short circuit.

According to a second aspect, the present application provides a battery, including the battery cell in the foregoing embodiments.

In the technical solution of the embodiments of the present application, the foregoing battery cell may be used, to reduce a risk that the battery cell burns and explodes, and reduce an impact on an adjacent battery cell, thereby helping improve use reliability and stability of the battery.

According to a third aspect, the present application provides a power consuming apparatus, including the battery cell in the foregoing embodiments; or including the battery in the foregoing embodiment.

In the technical solution of the embodiments of the present application, the foregoing battery is used, to help improve use reliability and stability of the power consuming apparatus.

According to a fourth aspect, the present application provides a bracket, used in a battery cell. The battery cell includes a housing and an electrode assembly arranged in the housing, and an explosion-proof valve is arranged on the housing. The bracket includes: a bracket body having a first side and a second side that are arranged opposite to each other in a thickness direction of the bracket body, where an exhaust hole that extends through the first side and the second side is provided on the bracket body, and the exhaust hole is configured to be opposite to the explosion-proof valve; and a first abutting portion, arranged on the first side and protruding in a direction away from the second side, and configured to abut against an end portion of the electrode assembly, so that the exhaust hole and the end portion of the electrode assembly are spaced away and jointly form a first exhaust channel.

In the technical solution of this embodiment of the present application, the first abutting portion is arranged on the first side of the bracket body, and the first abutting portion abuts against the end portion of the electrode assembly. This can increase a distance between the first side of the bracket body and the end portion of the electrode assembly, that is, increase a distance between the exhaust hole and the end portion of the electrode assembly, so that the first exhaust channel in communication with the exhaust hole is defined between the first side of the bracket body and the end portion of the electrode assembly, to improve an exhaustion capability. When thermal runaway tends to occur in the battery cell, generated gas may first enter the first exhaust channel, then pass through the bracket through the exhaust hole, and finally may be discharged from the explosion-proof valve, to implement rapid pressure relief, so that a risk that the battery cell burns and explodes can be reduced, and an impact on an adjacent battery cell can be reduced, thereby helping improve use reliability and stability of a battery.

In some embodiments, a gas passage gap that extends through the first side and the second side is provided in a circumferential direction of the bracket, and the gas passage gap is configured to form a gas passage channel together with the housing, so that the gas passage channel is in communication with the first exhaust channel. The gas passage gap is provided on the bracket, and the gas passage gap and the housing may define the gas passage channel, so that gas generated in a circumferential direction of the electrode assembly can move to a position of the explosion-proof valve through a gas passage channel at a corresponding position in a short time, to improve timeliness of pressure relief of the explosion-proof valve. In addition, gas in the first exhaust channel may flow to the exhaust hole and the gas passage channel respectively in a short time, to implement instantaneous pressure relief, and finally may be discharged from the explosion-proof valve, to implement final pressure relief, so as to further reduce the risk that the battery cell burns and explodes and improve the use reliability and stability of the battery. Moreover, during injection, an electrolyte solution may flow to the electrode assembly through the gas passage gap, to shorten infiltration time and improve infiltration efficiency.

In some embodiments, a first extending portion further protrudes on the first side of the bracket body, the first extending portion is arranged around a circumferential direction of the bracket body and defines a matching groove with the bracket body, and the matching groove is configured to match the end portion of the electrode assembly. In the technical solution, the first extending portion may be arranged, to restrict one end of the electrode assembly, so that a probability that an outer layer of an active material coating portion of the electrode assembly is in a fluffy state is reduced, and one end of the electrode assembly is further protected, to alleviate a problem that one end of the electrode assembly touches the housing. Therefore, occurrence of a phenomenon that the electrode assembly is scratched by the housing is reduced, and use reliability of the battery cell is improved.

In some embodiments, the first extending portion and the first abutting portion are spaced away, and jointly form a first flow guide channel, and the first flow guide channel is configured to be in communication with at least one gas passage channel and the first exhaust channel.

The first flow guide channel may increase a space occupied by an exhaust path, to help improve the exhaustion capability, and may also play a guiding function, so that a part of gas entering the first exhaust channel may flow to the gas passage channel along the first flow guide channel, and the gas passes through the bracket through the gas passage channel and finally may be discharged from the explosion-proof valve, to implement pressure relief, so as to further reduce the risk that the battery cell burns and explodes and improve the use reliability and stability of the battery. In addition, the first flow guide channel may guide flow of the electrolyte solution, to further shorten the infiltration time and greatly improve the infiltration efficiency.

In some embodiments, in a length direction of the bracket, there are a plurality of gas passage gaps on both sides of the exhaust hole, and a plurality of gas passage gaps located on a same side of the exhaust hole share one first flow guide channel. In the technical solution, the gas entering the first exhaust channel may flow to two sides of the exhaust hole in the length direction of the battery cell under the guidance of the two first flow guide channels, to implement instantaneous pressure relief, then pass through the bracket through the plurality of gas passage channels, and finally may be discharged from the explosion-proof valve, to implement final pressure relief, so as to further reduce the risk that the battery cell burns and explodes and improve the use reliability and stability of the battery. During injection, the electrolyte solution may flow under the guidance of the two first flow guide channels, to shorten the infiltration time and improve the infiltration efficiency.

In some embodiments, the first abutting portion is arranged in an arc shape, there are two first abutting portions, the two first abutting portions are respectively located on two sides of the exhaust hole, and the plurality of gas passage gaps located on the same side of the exhaust hole are provided at intervals around a circumferential direction of a corresponding first abutting portion. In the technical solution, the first abutting portion is arranged in the arc shape, the plurality of gas passage gaps located on the same side of the exhaust hole are provided at intervals around the circumferential direction of the corresponding first abutting portion, and the first flow guide channel arranged in an arc shape may be defined, to increase a space occupied by the first flow guide channel, improve the space utilization of the bracket, and further improve the exhaustion capability. In addition, the infiltration time can be further shortened, and the infiltration efficiency can be further improved.

In some embodiments, two through holes are provided on the bracket body and are configured to expose a positive terminal and a negative terminal of the battery cell. The exhaust hole is located between the two through holes, the two first abutting portions are arranged in one-to-one correspondence with the two through holes, and each first abutting portion is arranged around an outer periphery of a corresponding through hole. In the technical solution, the first abutting portion and the first extending portion may define the first flow guide channel arranged in an arc shape, to increase the space occupied by the first flow guide channel, improve the space utilization of the bracket, and also improve the exhaustion capability. In addition, the first abutting portion is arranged around the through hole, and may guide gas at the through hole to flow to the first exhaust channel, so that the part of gas may pass through the bracket through the exhaust hole as much as possible, to further improve the exhaustion capability.

In some embodiments, the bracket further includes: a second abutting portion, arranged on the second side and protruding in a direction away from the first side, and configured to abut against a wall of the housing on which the explosion-proof valve is arranged, where the exhaust hole and the wall jointly form a second exhaust channel. The second exhaust channel is in communication with at least one gas passage channel. In the technical solution, the second abutting portion is arranged on the second side of the bracket body, and the second abutting portion abuts against the wall of the housing on which the explosion-proof valve is arranged, so that the second exhaust channel in communication with the gas passage channel is defined between the second side of the bracket body and the wall of the housing, to increase the space occupied by the exhaust path, improve the exhaustion capability, reduce the risk that the battery cell burns and explodes, reduce the impact on the adjacent battery cell, and help improve the use reliability and stability of the battery.

In some embodiments, a second extending portion further protrudes on the second side of the bracket body, the second extending portion and the second abutting portion are spaced away, and jointly form a second flow guide channel, and the second flow guide channel is configured to be in communication with at least one gas passage channel and the second exhaust channel. The second flow guide channel may increase the space occupied by the exhaust path, to help improve the exhaustion capability, and may also play a guiding function, so that a part of gas passing through the bracket through the gas passage channel may flow to the second exhaust channel along the second flow guide channel and finally may be discharged from the explosion-proof valve, to implement pressure relief, so as to further reduce the risk that the battery cell burns and explodes and improve the use reliability and stability of the battery. In addition, the second flow guide channel may guide flow of the electrolyte solution, to further shorten the infiltration time and greatly improve the infiltration efficiency.

In some embodiments, in the length direction of the bracket, there are a plurality of gas passage gaps on both sides of the exhaust hole, and a plurality of gas passage gaps located on a same side of the exhaust hole share one second flow guide channel. In the technical solution, the gas passing through the bracket may flow to the second exhaust channel under the guidance of the second flow guide channel, and finally may be discharged from the explosion-proof valve, to implement final pressure relief, so as to further reduce the risk that the battery cell burns and explodes and improve the use reliability and stability of the battery. The electrolyte solution may flow to the plurality of gas passage gaps under the guidance of the second flow guide channel, to shorten the infiltration time and improve the infiltration efficiency.

In some embodiments, the second abutting portion is arranged in an arc shape, there are two second abutting portions, the two second abutting portions are respectively located on two sides of the exhaust hole, and the plurality of gas passage gaps located on the same side of the exhaust hole are provided at intervals around a circumferential direction of the second abutting portion. In the technical solution, the second abutting portion is arranged in the arc shape, the plurality of gas passage gaps located on the same side of the exhaust hole are provided at intervals around the circumferential direction of the corresponding second abutting portion, and the second flow guide channel arranged in an arc shape may be defined, to increase a space occupied by the second flow guide channel, improve the space utilization of the bracket, and further improve the exhaustion capability. In addition, the infiltration time can be further shortened, and the infiltration efficiency can be further improved.

In some embodiments, a positive terminal and a negative terminal are further arranged on a wall of the housing on which the explosion-proof valve is arranged, two through holes exposing the positive terminal and the negative terminal are provided on the bracket body, and the exhaust hole is located between the two through holes. The two second abutting portions are arranged in one-to-one correspondence with the two through holes, and each second abutting portion is arranged around an outer periphery of a corresponding through hole. In the technical solution, the second abutting portion and the second extending portion may define the second flow guide channel arranged in the arc shape, to increase the space occupied by the second flow guide channel, improve the space utilization of the bracket, and also improve the exhaustion capability. In addition, the second abutting portion is arranged around the through hole, to reduce backflow of gas from the through hole.

The foregoing description is merely an overview of the technical solutions of the present application. To understand the technical means of the present application more clearly, implementation can be performed according to content of the specification. Moreover, to make the foregoing and other objectives, features, and advantages of the present application more comprehensible, specific implementations of the present application are described below.

### BRIEF DESCRIPTION OF THE DRAWINGS

Various other advantages and benefits become clear to a person of ordinary skill in the art by reading the following detailed description of exemplary implementations. The accompanying drawings are merely used for illustrating the preferred implementations and are not intended to constitute a limitation on the present application. In all the accompanying drawings, the same reference numerals indicate the same parts. In the accompanying drawings:
FIG. 1 is a schematic structural diagram of a vehicle according to some embodiments of the present application;
FIG. 2 is a structural exploded view of a battery according to some embodiments of the present application;
FIG. 3 is a three-dimensional view of a battery cell according to some embodiments of the present application;
FIG. 4 is a structural cross-sectional view of a battery cell according to some embodiments of the present application;
FIG. 5 is a structural cross-sectional view of a battery cell according to some embodiments of the present application;
FIG. 6 is a partial enlarged view of the battery cell shown in FIG. 5;
FIG. 7 is an assembly diagram of an electrode assembly and a bracket of a battery cell according to some embodiments of the present application.
FIG. 8 is a schematic structural diagram of a bracket of a battery cell from a perspective according to some embodiments of the present application;
FIG. 9 is a partial enlarged view of the bracket shown in FIG. 8;
FIG. 10 is a schematic structural diagram of a bracket of a battery cell from another perspective according to some embodiments of the present application;
FIG. 11 is a partial enlarged view of the bracket shown in FIG. 10;
FIG. 12 is a partial cross-sectional view of a battery cell according to some embodiments of the present application;
FIG. 13 is a partial cross-sectional view of a battery cell according to some embodiments of the present application;
FIG. 14 is a partial cross-sectional view of a battery cell according to some embodiments of the present application;
FIG. 15 is a partial cross-sectional view of a battery cell according to some embodiments of the present application;
FIG. 16 is a partial cross-sectional view of a battery cell according to some embodiments of the present application; and
FIG. 17 is a partial cross-sectional view of a battery cell according to some embodiments of the present application.

Illustrations of reference signs:
Power consuming apparatus 1000, battery 100, controller 200, motor 300,
first direction Z, second direction X, third direction Y, axial direction R of a terminal,
battery cell 10,
box 20, first portion 201, second portion 202,
housing 11, housing body 111, opening 1110, housing cover 112, mounting hole 113, terminal 12, positive terminal 1201, negative terminal 1202, accommodating portion 121, a first accommodating groove 12110, first end wall 12111, first sinking groove 12112, first side wall 12113, second accommodating groove 12120, second end wall 12121, second sinking groove 12122, second side wall 12123, via hole 12130, terminal inner end surface 122, terminal outer end surface 123, first groove 126, spacer portion 127, cover plate 13; first conductive member 131; second groove 1311; second conductive member 132;
electrode assembly 2, active material coating portion 21, conductive portion 22,
bracket 3, matching groove 30, gas passage channel 301, first exhaust channel 302, second exhaust channel 303, first flow guide channel 304, second flow guide channel 305, bracket body 31, first side 311, second side 312, exhaust hole 313, through hole 314, gas passage gap 315, mounting recessed portion 316, gas passage hole 317, positioning groove 318, weight reducing groove 319, first abutting portion 321, second abutting portion 322, first extending portion 331, second extending portion 332,
insulating member 4, explosion-proof valve 6, and groove cover 7.

### DETAILED DESCRIPTION

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical terms and scientific terms used herein have the same meaning as commonly understood by those skilled in the technical field of the present application. Terms used in this specification are merely intended to describe objectives of specific embodiments, but are not intended to limit the present application. The terms "including" and "having" and any variations thereof in the specification and claims of the present application as well as the above description of the drawings are intended to cover non-exclusive inclusions.

In descriptions of the embodiments of the present application, the technical terms "first," "second" and the like are used only to distinguish different objects and are not understood to indicate or imply relative importance or to imply the number, specific order or primary and secondary relationship of the indicated technical features. In the descriptions of the embodiments of the present application, unless otherwise specifically limited, "a plurality of" means two or more than two.

"Embodiment" mentioned in the specification means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

In the description of embodiments of the present application, the term "and/or" herein is simply a description of the association relationship of the associated objects, indicating that three relationships can exist, for example, A and/or B may indicate that A exists alone, A and B exist at the same time, and B exists alone. In addition, the character "/" in this specification generally indicates an "or" relationship between the associated objects.

In the descriptions of the embodiments of the present application, "a plurality of" refers to more than two (including two). Likewise, "a plurality of groups" refers to more than two (including two) groups, and "a plurality of pieces" refers to more than two (including two) pieces.

In the descriptions of the embodiments of the present application, it should be understood that orientation or positional relationships indicated by terms such as "center," "longitudinal," "transverse," "length," "width," "thickness," "up," "down," "front," "back," "left," "right," "vertical," "horizontal," "top," "bottom," "inner," "outer," "clockwise," "counterclockwise," "axial," "radial," "circumferential," etc. are based on the orientation or positional relationships shown in the drawings, for ease of description of the embodiments of the present application and simplification of the description only, these terms do not indicate or imply that the apparatus or element referred to must have a specific orientation or be constructed and operated in a specific orientation, and therefore cannot be construed as limitations to the embodiments of the present application.

In the present application, unless otherwise explicitly specified or defined, the terms such as "install", "connect", "connection", and "fix" should be understood in a broad sense. For example, the connection may be a fixed connection, a detachable connection, or an integral connection; the connection may be a mechanical connection, or an electrical connection; or the connection may be a direct connection, an indirect connection through an intermediate, or internal communication between two elements or an interaction relationship between two elements. To a person of normal skill in the art, specific meanings of the above terms in the present application may be construed as dependent on specific situations.

Currently, from the perspective of development of market situations, power batteries are more widely used. The power batteries are not only used in energy storage power systems such as water power stations, thermal power stations, wind power stations, and solar power stations, but also widely used in a plurality of fields such as electric bicycles, electric motorcycles, electric vehicles, military equipment, and aerospace. With continuous expansion of application fields of the power batteries, market demands of the power batteries are also continuously expanded.

In a battery cell of the related art, an explosion-proof sheet is arranged at a center of a lower plastic member, a concave cavity recessed toward an electrode assembly is provided below the explosion-proof sheet, and a plurality of groups of grid holes are provided on a bottom surface of the concave cavity, so that the explosion-proof sheet of a lithium battery may be in direct communication with an internal space of the lithium battery, and the explosion-proof sheet can sensitively sense pressure of the internal space of the lithium battery. However, because the grid holes are close to the electrode assembly, an exhaust rate is slow, which affects an exhaustion capability, and seriously affects reliability of the battery cell.

To improve the reliability of the battery cell, in the present application, a first abutting portion is arranged on a side of a bracket body toward the electrode assembly, so that a first exhaust channel in communication with an exhaust hole is defined between the exhaust hole and an end portion of the electrode assembly, to improve the exhaustion capability, reduce a risk that the battery cell burns and explodes, reduce an impact on an adjacent battery cell, and help improve use reliability and stability of a battery.

The battery cell disclosed in the embodiments of the present application may be used in power consuming apparatuses using batteries as power supplies or used in various energy storage systems using the batteries as energy storage elements. The power consuming apparatus may be but is not limited to a mobile phone, a tablet, a notebook computer, an electric toy, an electric tool, an electric scooter, an electric vehicle, a ship, a spacecraft, or the like. The electric toy may include a fixed or mobile electric toy, such as a game console, an electric vehicle toy, an electric ship toy, and an electric airplane toy. The spacecraft may include an airplane, a rocket, a space shuttle, a spaceship, or the like.

For ease of description, the following embodiments are described by using an example in which a power consuming apparatus 1000 according to an embodiment of the present application is a vehicle.

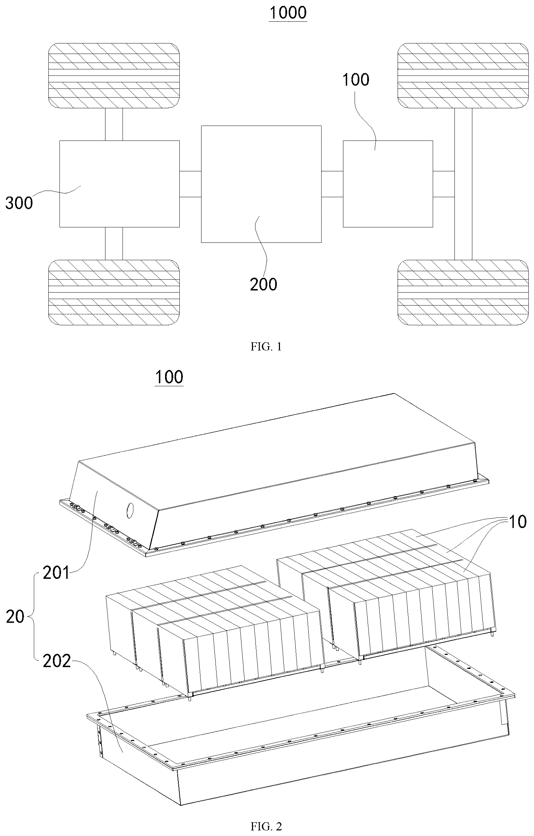

Referring to FIG. 1, FIG. 1 is a schematic structural diagram of a vehicle according to some embodiments of the present application. The vehicle may be an oil-fueled vehicle, a gas-powered vehicle, or a new energy vehicle. The new energy vehicle may be a battery electric vehicle, a hybrid electric vehicle, an extended-range electric vehicle, or the like. A battery 100 is arranged inside the vehicle, and the battery 100 may be arranged at the bottom, the front, or the back of the vehicle. The battery 100 may be configured to supply electricity to the vehicle. For example, the battery 100 may serve as an operation power supply of the vehicle. The vehicle may further include a controller 200 and a motor 300. The controller 200 is configured to control the battery 100 to supply electricity to the motor 300, for example, for operating electricity requirements during start-up, navigation, and running of the vehicle.

In some embodiments of the present application, the battery 100 may not only serve as the operation power source for the vehicle, but also serve as a driving power source for the vehicle, to replace or partially replace fuel or natural gas to provide driving power for the vehicle.

Referring to FIG. 2, FIG. 2 is an exploded view of a battery 100 according to some embodiments of the present application. The battery 100 includes a box 20 and a battery cell 10. The battery cell 10 is accommodated inside the box 20. The box 20 is configured to provide an accommodating space for the battery cell 10, and the box 20 may have a plurality of structures. In some embodiments, the box 20 may include a first portion 201 and a second portion 202. The first portion 201 and the second portion 202 cover each other, and the first portion 201 and the second portion 202 jointly define the accommodating space for accommodating the battery cell 10. The second portion 202 may be a hollow structure with an opening on an end, the first portion 201 may be a plate-shaped structure, and the first portion 201 covers an opening side of the second portion 202, so that the first portion 201 and the second portion 202 jointly define the accommodating space. The first portion 201 and the second portion 202 each may alternatively be a hollow structure with an opening on a side, and the opening side of the first portion 201 covers the opening side of the second portion 202. Certainly, the box 20 including the first portion 201 and the second portion 202 may be in various shapes, for example, a cylinder and a cuboid.

There may be a plurality of battery cells 10 in the battery 100, and the plurality of battery cells 10 may be connected to each other in series, in parallel, or in parallel-series. The parallel-series connection indicates that the plurality of battery cells 10 are connected in both series and parallel. The plurality of battery cells 10 may be directly connected in series, in parallel, or in parallel-series, and then an entirety formed by the plurality of battery cells 10 is accommodated in the box 20. Certainly, the battery 100 may be in a battery 100 module form in which the plurality of battery cells 10 may alternatively be first connected in series, in parallel, or in parallel-series, then a plurality of battery 100 modules are connected in series, in parallel, or in parallel-series, to form as an entirety, and the entirety is accommodated in the box 20. The battery 100 may further include other structures. For example, the battery 100 may further include a bus component, configured to electrically connect the plurality of battery cells 10.

Each battery cell 10 may be a secondary battery or a primary battery; or may be a lithium-sulfur battery, a sodium ion battery, or a magnesium-ion battery, but is not limited thereto. The battery cell 10 may be in a shape of a cylinder, a flat body, or a cuboid, or in another shape.

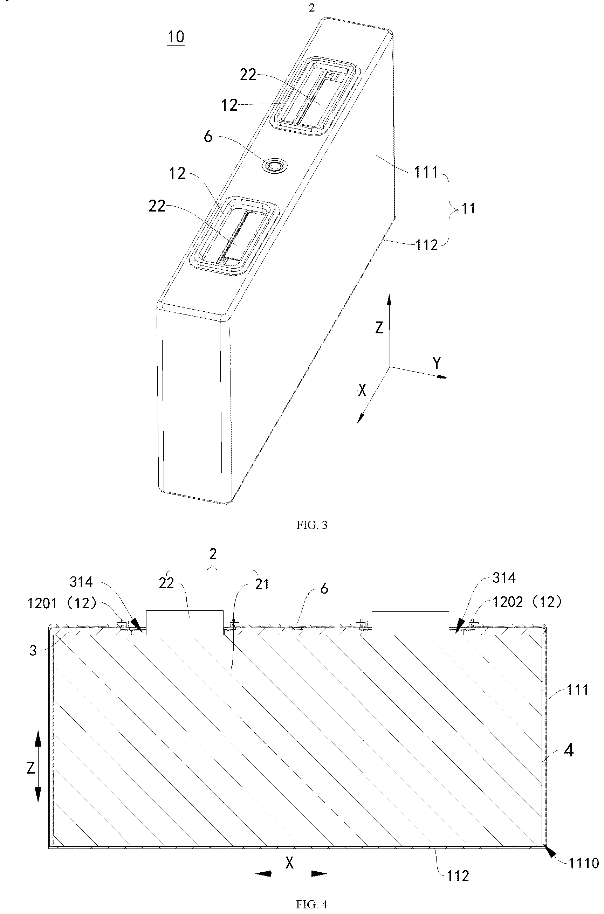

Referring to FIG. 3 and FIG. 4, FIG. 3 is a schematic exploded structural view of a battery cell 10 according to some embodiments of the present application; and FIG. 4 is a structural cross-sectional view of a battery cell 10 according to some embodiments of the present application. The battery cell 10 is a smallest unit forming the battery 100. The battery cell 10 includes a housing 11, an electrode assembly 2, and a bracket 3. As shown in FIG. 3 and FIG. 4, an explosion-proof valve 6 may be arranged on the housing 11. The explosion-proof valve 6 is configured to relieve an internal pressure when the internal pressure or a temperature of the battery cell 10 reaches a threshold. The housing 11 may include a housing body 111 and a housing cover 112. The explosion-proof valve 6 may be arranged on the housing cover 112 or may be arranged on the housing body 111.

The housing cover 112 is a component that covers an opening 1110 of the housing body 111 to isolate an internal environment of the battery cell 10 from an external environment. Without limitation, a shape of the housing cover 112 may be adapted to a shape of the housing body 111 to match the housing body 111. Optionally, the housing 112 may be made of a material (for example, an aluminum alloy) having particular stiffness and strength. In this way, the housing 112 is not easily deformed when being squeezed or collided, so that the battery cell 10 can have higher structural strength and reliability can also be improved. A functional component such as an electrode terminal may be arranged on the housing cover 112. The electrode terminal may be configured to electrically connect to the electrode assembly 2, to output or input electric energy of the battery cell 10. The housing cover 112 may be made of a plurality of materials, for example, copper, iron, aluminum, stainless steel, aluminum alloy, and plastic, which are not particularly limited in this embodiment of the present application.

The housing body 111 is a component configured to match the housing cover 112 to form an internal environment of the battery cell 10. The formed internal environment may be configured to accommodate the electrode assembly 2, an electrolyte solution, and other components. The housing body 111 and the housing cover 112 may be independent components. The opening 1110 may be provided on the housing body 111, so that the housing cover 112 covers the opening 1110 to form the internal environment of the battery cell 10. Without limitation, the housing cover 112 and the housing body 111 may alternatively be integrated. Specifically, the housing cover 112 and the housing body 111 may first form a common connection surface before other components are put into the housing. When the interior of the housing body 111 needs to be encapsulated, the housing cover 112 covers the housing body 111. The housing body 111 may be in various shapes and various sizes, for example, a rectangular shape, a cylindrical shape, and a hexagonal prism shape. Specifically, the shape of the housing body 111 may be determined according to a specific shape and size of the electrode assembly 2. The housing body 111 may be made of a plurality of materials, for example, copper, iron, aluminum, stainless steel, aluminum alloy, and plastic, which are not particularly limited in this embodiment of the present application.

The electrode assembly 2 is a component, in which an electrochemical reaction occurs, in the battery cell 10. The housing 11 may include one or more electrode assemblies 2. The electrode assembly 2 is mainly formed by winding or stacking a positive electrode plate and a negative electrode plate, and a separator is usually arranged between the positive electrode plate and the negative electrode plate. Parts of the positive electrode plate and the negative electrode plate that have active materials constitute a main body part of the electrode assembly 2, and parts of the positive electrode plate and the negative electrode plate that do not have the active materials each constitute a tab. The positive electrode tab and the negative electrode tab may be jointly located on one end of the main body part or may be respectively located on two ends of the main body part. During charging and discharging of the battery 100, the positive active material and the negative active material react with the electrolyte solution, and the tabs are connected to electrode terminals to form a current loop.

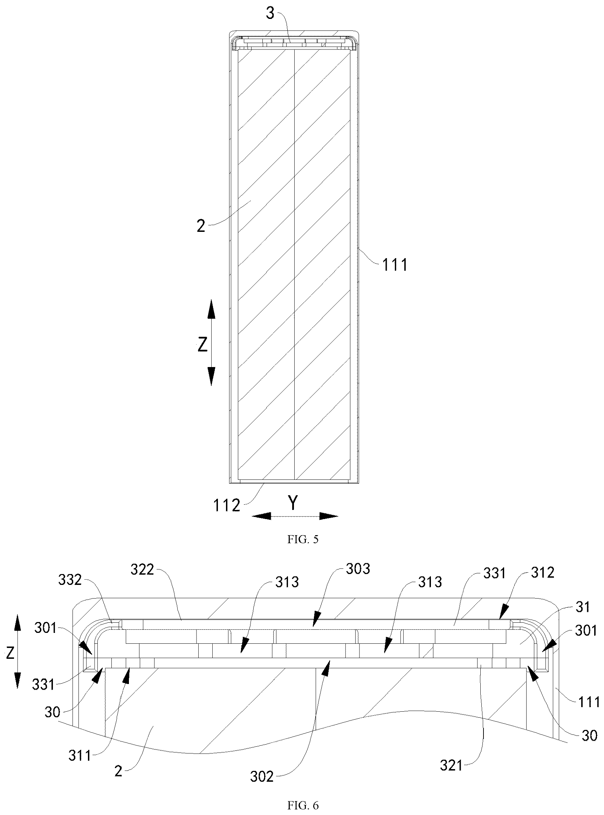

Referring to FIG. 4, and further referring to FIG. 5 and FIG. 6, FIG. 5 is a structural cross-sectional view of a battery cell 10 according to some embodiments of the present application; and FIG. 6 is a partial enlarged view of the battery cell 10 shown in FIG. 5. The bracket 3 includes a bracket body 31. The bracket body 31 has a first side 311 and a second side 312. The first side 311 and the second side 312 are arranged opposite to each other in a thickness direction (a Z direction shown in FIG. 6) of the bracket body 31. An exhaust hole 313 is provided on the bracket body 31, the exhaust hole 313 extends through the first side 311 and the second side 312 of the bracket body 31, and the exhaust hole 313 is configured to be opposite to the explosion-proof valve 6.

The bracket 3 further includes a first abutting portion 321. The first abutting portion 321 is arranged on the first side 311 of the bracket body 31, and the first abutting portion 321 protrudes in a direction away from the second side 312 of the bracket body 31. The first abutting portion 321 is configured to abut against an end portion of the electrode assembly 2, so that the exhaust hole 313 and the end portion of the electrode assembly 2 jointly form a first exhaust channel 302.

That "the first abutting portion 321 abuts against the end portion of the electrode assembly 2" means that the first abutting portion 321 is in contact with and matches the end portion of the electrode assembly 2. When the bracket 3 is located above the electrode assembly 2, the end portion of the electrode assembly 2 may support the bracket 3. When the bracket 3 is located below the electrode assembly 2, the bracket 3 may support the electrode assembly 2.

That the first abutting portion 321 is arranged on the first side 311 of the bracket body 31 specifically means that the first abutting portion 321 is arranged on a side of the bracket body 31 toward the end portion of the electrode assembly 2. Because the first abutting portion 321 abuts against the end portion of the electrode assembly 2, the first side 311 of the bracket body 31 and the end portion of the electrode assembly 2 are spaced apart from each other, so that the first exhaust channel 302 is defined between the first side 311 of the bracket body 31 and the end portion of the electrode assembly 2, and the exhaust hole 313 is in communication between the first exhaust channel 302 and the explosion-proof valve 6.

In the technical solution of this embodiment of the present application, the first abutting portion 321 is arranged on the first side 311 of the bracket body 31, and the first abutting portion 321 abuts against the end portion of the electrode assembly 2. This can increase a distance between the first side 311 of the bracket body 31 and the end portion of the electrode assembly 2, that is, increase a distance between the exhaust hole 313 and the end portion of the electrode assembly 2, so that the first exhaust channel 302 in communication with the exhaust hole 313 is defined between the first side 311 of the bracket body 31 and the end portion of the electrode assembly 2, to improve an exhaustion capability. When thermal runaway tends to occur in the battery cell 10, generated gas may first enter the first exhaust channel 302, then pass through the bracket 3 through the exhaust hole 313, and finally may be discharged from the explosion-proof valve 6, to implement rapid pressure relief, so that a risk that the battery cell 10 burns and explodes can be reduced, and an impact on an adjacent battery cell 10 can be reduced, thereby helping improve use reliability and stability of the battery 100.

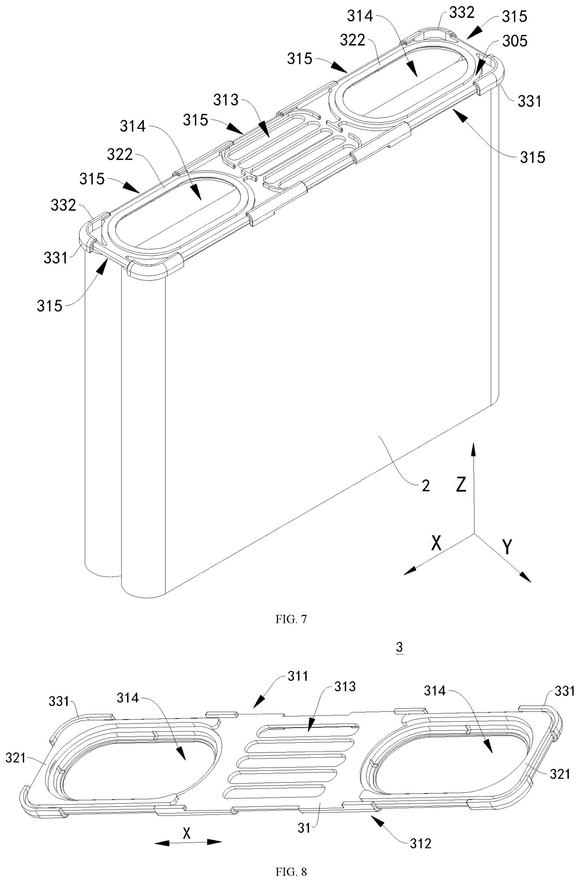

Referring to FIG. 5 and FIG. 6 again, and further referring to FIG. 7, FIG. 7 is an assembly diagram of an electrode assembly 2 and a bracket 3 of a battery cell 10 according to some embodiments of the present application. In FIG. 7, a Z direction is a first direction, namely, a height direction of the electrode assembly 2, an X direction is a second direction, namely, a width direction of the electrode assembly 2, a Y direction is a third direction, namely, a thickness direction of the electrode assembly 2, and the bracket 3 is arranged at one end in the height direction of the electrode assembly 2.

A gas passage gap 315 is provided in a circumferential direction of the bracket 3. The gas passage gap 315 extends through the first side 311 and the second side 312 of the bracket body 31. The circumferential direction of the bracket 3 matches the housing 11, so that the gas passage gap 315 and the housing 11 jointly form a gas passage channel 301, and the gas passage channel 301 is in communication with the first exhaust channel 302.

The gap means a gap formed by missing one piece at an edge of a structure. The gas passage gap 315 in this embodiment of the present application is a gas passage gap formed by missing one piece in the circumferential direction of the bracket 3. When the bracket 3 matches the housing 11, the housing 11 may close an opening of the gas passage gap 315, to define the gas passage channel 301.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas may be finally discharged from the explosion-proof valve 6, to implement rapid pressure relief.

In the technical solution, the gas passage gap 315 is provided on the bracket 3, and the gas passage gap 315 and the housing 11 may define the gas passage channel 301, so that gas generated in a circumferential direction of the electrode assembly 2 can move to a position of the explosion-proof valve 6 through a gas passage channel 301 at a corresponding position in a short time, to improve timeliness of pressure relief of the explosion-proof valve 6. In addition, the gas in the first exhaust channel 302 may flow to the exhaust hole 313 and the gas passage channel 301 respectively in a short time, to implement instantaneous pressure relief, and finally may be discharged from the explosion-proof valve 6, to implement final pressure relief, so as to further reduce the risk that the battery cell 10 burns and explodes and improve the use reliability and stability of the battery 100. Moreover, during injection, an electrolyte solution may flow to the electrode assembly 2 through the gas passage gap 315, to shorten infiltration time and improve infiltration efficiency.

Referring to FIG. 7 again, a plurality of gas passage gaps 315 are provided in the circumferential direction of the bracket 3, and the plurality of gas passage gaps 315 are arranged at intervals. For example, the plurality of gas passage gaps 315 may be evenly distributed in the circumferential direction of the bracket 3, or the plurality of gas passage gaps 315 may be distributed at a local position in the circumferential direction of the bracket 3 in a centralized manner. Each gas passage gap 315 and the housing 11 jointly form one gas passage channel 301, and a plurality of gas passage channels 301 are provided around a circumferential direction of the first exhaust channel 302.

Therefore, the plurality of gas passage gaps 315 are provided, the plurality of gas passage channels 301 may be defined, and a part of the gas in the first exhaust channel 302 spreads in all directions, may pass through the bracket 3 through the plurality of gas passage channels 301, and finally may be discharged from the explosion-proof valve 6. This can greatly reduce the risk that the battery cell 10 burns and explodes and greatly improve the use reliability and stability of the battery 100. During injection, the electrolyte solution may flow to the electrode assembly 2 through the plurality of gas passage gaps 315, to further shorten the infiltration time and greatly improve the infiltration efficiency.

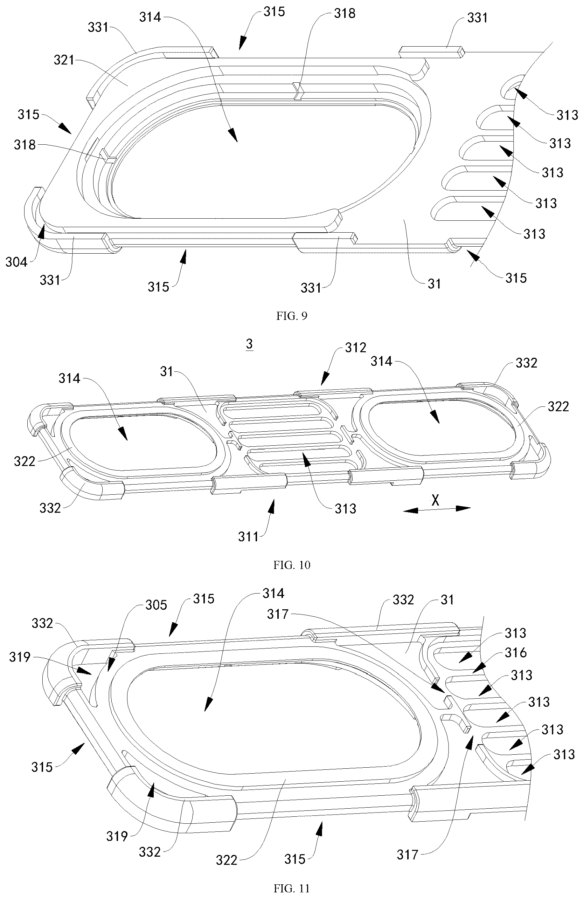

Referring to FIG. 7 again, and further referring to FIG. 8 and FIG. 9, FIG. 8 is a schematic structural diagram of a bracket 3 of a battery cell 10 from a perspective according to some embodiments of the present application; and FIG. 9 is a partial enlarged view of the bracket 3 shown in FIG. 8. A first extending portion 331 further protrudes on the first side 311 of the bracket body 31, and the first extending portion 331 is arranged around a circumferential direction of the bracket body 31. The first extending portion 331 and the bracket body 31 define a matching groove 30, and the end portion of the electrode assembly 2 is arranged in the matching groove 30.

In other words, the bracket body 31 is arranged on the end portion of the electrode assembly 2, and the first extending portion 331 is arranged on a circumferential side of the electrode assembly 2. It should be noted that after the bracket 3 and the electrode assembly 2 may be assembled together, the bracket 3 and the electrode assembly 2 are mounted into the housing 11 together. Alternatively, the bracket 3 may be first pre-mounted into the housing 11, then the electrode assembly 2 is mounted into the housing 11, and the electrode assembly 2 matches the bracket 3.

In an embodiment in which the bracket 3 and the electrode assembly 2 are mounted into the housing 11 together after being assembled, in a process of mounting into the housing, the first extending portion 331 may protect the electrode assembly 2, to reduce a probability that the electrode assembly 2 touches the housing 11, so that occurrence of a phenomenon that the electrode assembly 2 is scratched by the housing 11 is further reduced, to reduce a possibility that an active material of the electrode assembly 2 falls off, avoid an internal short circuit caused by overlapping of the fallen-off active material and an electrode plate with an opposite polarity to a certain extent, avoid corrosion and penetration of the housing 11 caused by a chemical reaction between the fallen-off active material and the housing 11 to a certain extent, and improve use reliability of the battery cell 10. In addition, the first extending portion 331 may be engaged with the electrode assembly 2, to avoid falling off of the bracket 3 before being mounted into the housing to a certain extent, and improve a product yield of the battery cell 10. After the bracket 3 and the electrode assembly 2 are mounted into the housing, the first extending portion 331 may restrict one end of the electrode assembly 2, so that a probability that an outer layer of an active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of the phenomenon that the electrode assembly 2 is scratched by the housing 11 is reduced, and the use reliability of the battery cell 10 is improved.

In an embodiment in which the bracket 3 is first pre-mounted into the housing 11, and then the electrode assembly 2 is mounted into the housing 11, the first extending portion 331 may restrict one end of the electrode assembly 2, so that a probability that an outer layer of an active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of a phenomenon that the electrode assembly 2 is scratched by the housing 11 is reduced, and use reliability of the battery cell 10 is improved.

Therefore, in the technical solution, the first extending portion 331 may be arranged, to restrict one end of the electrode assembly 2, so that stability of the electrode assembly 2 during shaking of the battery cell 10 is improved, the probability that the outer layer of the active material coating portion 21 of the electrode assembly 2 is in the fluffy state is reduced, and one end of the electrode assembly 2 is further protected, to alleviate the problem that one end of the electrode assembly 2 touches the housing 11. Therefore, occurrence of the phenomenon that the electrode assembly 2 is scratched by the housing 11 is reduced, and the use reliability of the battery cell 10 is improved.

The gas passage gap 315 extends through the first extending portion 331 and the bracket body 31. The formed gas passage channel 301 passes through two sides of the bracket 3 in a thickness direction and is in communication with the first exhaust channel 302 and the explosion-proof valve 6. The gas in the first exhaust channel 302 may flow to the exhaust hole 313 and the gas passage channel 301 respectively in a short time, to implement instantaneous pressure relief, and finally may be discharged from the explosion-proof valve 6, to implement final pressure relief, so as to further reduce the risk that battery cell 10 burns and explodes and improve the use reliability and stability of the battery 100.

Referring to FIG. 9 again, the first extending portion 331 and the first abutting portion 321 are spaced away, the first extending portion 331 and the first abutting portion 321 jointly form a first flow guide channel 304, and the first flow guide channel 304 is in communication with at least one gas passage channel 301 and the first exhaust channel 302.

The first flow guide channel 304 may increase a space occupied by an exhaust path, to help improve the exhaustion capability, and may also play a guiding function, so that the part of the gas entering the first exhaust channel 302 may flow to the gas passage channel 301 along the first flow guide channel 304, and the gas passes through the bracket 3 through the gas passage channel 301 and finally may be discharged from the explosion-proof valve 6, to implement pressure relief, so as to further reduce the risk that the battery cell 10 burns and explodes and improve the use reliability and stability of the battery 100. In addition, the first flow guide channel 304 may guide flow of the electrolyte solution, to further shorten the infiltration time and greatly improve the infiltration efficiency.

In a length direction (an X direction shown in the figure) of the battery cell 10, there are a plurality of gas passage gaps 315 on both sides of the exhaust hole 313, and a plurality of gas passage gaps 315 located on a same side of the exhaust hole 313 share one first flow guide channel 304.

In other words, the plurality of gas passage gaps 315 may be divided into two parts, and the two parts of gas passage gaps 315 are respectively located on two sides of the exhaust hole 313 in the length direction of the battery cell 10. Correspondingly, there are two first flow guide channels 304, and the two first flow guide channels 304 are respectively located on the two sides of the exhaust hole 313 in the length direction of the battery cell 10. In the length direction of the battery cell 10, the first flow guide channel 304 located on one side of the exhaust hole 313 is in communication with a plurality of gas passage gaps 315 at a corresponding position, so that the first flow guide channel 304 is in communication with a plurality of gas passage channels 301 at the corresponding position, and the first flow guide channel 304 located on the other side of the exhaust hole 313 is in communication with a plurality of gas passage gaps 315 at a corresponding position, so that the first flow guide channel 304 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may be divided through the two first flow guide channels 304, then pass through the bracket 3 through the plurality of gas passage channels 301, and flow to the second side 312 of the bracket body 31, and the gas may be finally discharged from the explosion-proof valve 6, to implement rapid pressure relief.

In the technical solution, the gas entering the first exhaust channel 302 may flow to two sides of the exhaust hole 313 in the length direction of the battery cell 10 under the guidance of the two first flow guide channels 304, to implement instantaneous pressure relief, then pass through the bracket 3 through the plurality of gas passage channels 301, and finally may be discharged from the explosion-proof valve 6, to implement final pressure relief, so as to further reduce the risk that the battery cell 10 burns and explodes and improve the use reliability and stability of the battery 100. During injection, the electrolyte solution may flow under the guidance of the two first flow guide channels 304, to shorten the infiltration time and improve the infiltration efficiency.

Referring to FIG. 8 and FIG. 9 again, the first abutting portion 321 is arranged in an arc shape, so that the first abutting portion 321 and the first extending portion 331 define the first flow guide channel 304 in an arc shape, and a contact area between the bracket 3 and the end portion of the electrode assembly 2 can be reduced, thereby reducing a probability of compression damage to the end portion of the electrode assembly 2 caused by the bracket 3.

There are two first abutting portions 321, and the two first abutting portions 321 are respectively located on two sides of the exhaust hole 313. For example, the two first abutting portions 321 are respectively formed as arc-shaped plates. Two ends of each arc-shaped plate are spaced away, and are arranged opposite to the exhaust hole 313.

The plurality of gas passage gaps 315 located on the same side of the exhaust hole 313 are provided at intervals around a circumferential direction of a corresponding first abutting portion 321, so that the plurality of gas passage gaps 315 located on the same side of the exhaust hole 313 are arranged in an extending direction of a corresponding first flow guide channel 304. In this way, a plurality of gas passage channels 301 are all in communication with the same first flow guide channel 304, and the gas at the first exhaust channel 302 flows in all directions of the first exhaust channel 302 under the guidance of the two first flow guide channels 304, passes through the bracket 3 through the plurality of gas passage channels 301, and finally may be discharged from the explosion-proof valve 6.

Therefore, in the technical solution, the first abutting portion 321 may be arranged in the arc shape, to reduce a probability of compression damage to the end portion of the electrode assembly 2 caused by the bracket 3. In addition, the first abutting portion 321 and the first extending portion 331 may define the first flow guide channel 304 arranged in the arc shape, to increase a space occupied by the first flow guide channel 304, so that all the plurality of gas passage gaps 315 located on the same side of the exhaust hole 313 are in communication with the first flow guide channel 304, to improve space utilization of the bracket 3 and further improve the exhaustion capability. In addition, the infiltration time can be further shortened, and the infiltration efficiency can be further improved.

Referring to FIG. 3 and FIG. 4, and FIG. 7 and FIG. 8, a positive terminal 1201 and a negative terminal 1202 are further arranged on a wall of the housing 11 on which the explosion-proof valve 6 is arranged. Two through holes 314 are provided on the bracket body 31, the exhaust hole 313 is located between the two through holes 314, and the two through holes 314 are respectively configured to expose the positive terminal 1201 and the negative terminal 1202. The two first abutting portions 321 are arranged in one-to-one correspondence with the two through holes 314, and each first abutting portion 321 is arranged around an outer periphery of a corresponding through hole 314. In other words, the first abutting portion 321 is formed as an arc-shaped structure arranged around the outer periphery of the corresponding through hole 314.

In the technical solution, the two through holes 314 may be provided on the bracket body 31, to avoid the positive terminal 1201 and the negative terminal 1202, so that the positive terminal 1201 and the negative terminal 1202 may be connected to corresponding conductive portions 22 of the electrode assembly 2. The first abutting portion 321 is arranged around an outer periphery of a corresponding through hole 314, so that the first abutting portion 321 and the first extending portion 331 may define the first flow guide channel 304 arranged in the arc shape, to increase the space occupied by the first flow guide channel 304, improve the space utilization of the bracket 3, and also improve the exhaustion capability. In addition, the first abutting portion 321 may guide gas at the through hole 314 to flow to the first exhaust channel 302, so that the part of gas may pass through the bracket 3 through the exhaust hole 313 as much as possible, to further improve the exhaustion capability.

Referring to FIG. 7 again, and further referring to FIG. 10 and FIG. 11, FIG. 10 is a schematic structural diagram of a bracket 3 of a battery cell 10 from another perspective according to some embodiments of the present application; and FIG. 11 is a partial enlarged view of the bracket 3 shown in FIG. 10. A second abutting portion 322 is arranged on the second side 312 of the bracket body 31, the second abutting portion 322 protrudes in a direction away from the first side 311, and the second abutting portion 322 is configured to abut against the wall of the housing 11 on which the explosion-proof valve 6 is arranged, so that the bracket 3 and the wall of the housing 11 jointly form a second exhaust channel 303, and the second exhaust channel 303 is in communication with at least one gas passage channel 301.

That the second abutting portion 322 is arranged on the second side 312 of the bracket body 31 specifically means that the second abutting portion 322 is arranged on a side of the bracket body 31 away from the end portion of the electrode assembly 2. Because the second abutting portion 322 abuts against the wall of the housing 11 on which the explosion-proof valve 6 is arranged, the second side 312 of the bracket body 31 and the wall of the housing 11 are spaced away, so that the second exhaust channel 303 is defined between the second side 312 of the bracket body 31 and the wall of the housing 11.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas finally gathers in the second exhaust channel 303 and is discharged from the explosion-proof valve 6, to implement rapid pressure relief.

In the technical solution, the second abutting portion 322 is arranged on the second side 312 of the bracket body 31, and the second abutting portion 322 abuts against the wall of the housing 11 on which the explosion-proof valve 6 is arranged, so that the second exhaust channel 303 in communication with the gas passage channel 301 is defined between the second side 312 of the bracket body 31 and the wall of the housing 11, to increase the space occupied by the exhaust path, improve the exhaustion capability, reduce the risk that the battery cell 10 burns and explodes, reduce the impact on the adjacent battery cell 10, and help improve the use reliability and stability of the battery 100.

Referring to FIG. 10 and FIG. 11 again, a second extending portion 332 further protrudes on the second side 312 of the bracket body 31, the second extending portion 332 and the second abutting portion 322 are spaced away, the second extending portion 332 and the second abutting portion 322 jointly form a second flow guide channel 305, and the second flow guide channel 305 is in communication with at least one gas passage channel 301 and the second exhaust channel 303.

The second flow guide channel 305 may increase the space occupied by the exhaust path, to help improve the exhaustion capability, and may also play a guiding function, so that the part of the gas passing through the bracket 3 through the gas passage channel 301 may flow to the second exhaust channel 303 along the second flow guide channel 305 and finally may be discharged from the explosion-proof valve 6, to implement pressure relief, so as to further reduce the risk that the battery cell 10 burns and explodes and improve the use reliability and stability of the battery 100. In addition, the second flow guide channel 305 may guide flow of the electrolyte solution, to further shorten the infiltration time and greatly improve the infiltration efficiency.

In the length direction of the battery cell 10, there are a plurality of gas passage gaps 315 on both sides of the exhaust hole 313, and a plurality of gas passage gaps 315 located on a same side of the exhaust hole 313 share one second flow guide channel 305.

In other words, the plurality of gas passage gaps 315 may be divided into two parts, and the two parts of gas passage gaps 315 are respectively located on two sides of the exhaust hole 313 in the length direction of the battery cell 10. Correspondingly, there are two second flow guide channels 305, and the two second flow guide channels 305 are respectively located on the two sides of the exhaust hole 313 in the length direction of the battery cell 10. In the length direction of the battery cell 10, the second flow guide channel 305 located on one side of the exhaust hole 313 is in communication with a plurality of gas passage gaps 315 at a corresponding position, so that the second flow guide channel 305 is in communication with a plurality of gas passage channels 301 at the corresponding position, and the second flow guide channel 305 located on the other side of the exhaust hole 313 is in communication with a plurality of gas passage gaps 315 at a corresponding position, so that the second flow guide channel 305 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may pass through the bracket 3 through the plurality of gas passage channels 301, flow to the second side 312 of the bracket body 31, and then flow along the second flow guide channel 305, and the gas finally gathers in the second exhaust channel 303, and is discharged from the explosion-proof valve 6, to implement rapid pressure relief.

During injection, the electrolyte solution may flow to the plurality of gas passage gaps 315 along the second flow guide channel 305, and the electrolyte solution passing through the gas passage gaps 315 may first flow along the second flow guide channel 304, and then flow to the electrode assembly 2, or may directly flow to the electrode assembly 2, to shorten the infiltration time of the electrolyte solution and improve the infiltration efficiency.

In the technical solution, the gas passing through the bracket 3 may flow to the second exhaust channel 303 located in the middle under the guidance of the second flow guide channel 305, and finally may be discharged from the explosion-proof valve 6, to implement final pressure relief, so as to further reduce the risk that the battery cell 10 burns and explodes and improve the use reliability and stability of the battery 100. The electrolyte solution may flow to the plurality of gas passage gaps 315 under the guidance of the second flow guide channel 305, to shorten the infiltration time and improve the infiltration efficiency.

Referring to FIG. 11, the second side 312 of the bracket body 31 has a mounting recessed portion 316. The mounting recessed portion 316 is recessed toward the first side 311, the second exhaust channel 303 is defined between the mounting recessed portion 316 and the wall of the housing 11 on which the explosion-proof valve 6 is arranged, and the exhaust hole 313 is provided on a bottom wall of the mounting recessed portion 316.

The mounting recessed portion 316 is a groove that is recessed relative to a surface of the second side 312 of the bracket body 31. The bottom wall of the mounting recessed portion 316 is lower than the surface of the second side 312 of the bracket body 31, so that a surface on which the exhaust hole 313 is located is lower than the surface of the second side 312 of the bracket body 31.

In the technical solution, the mounting recessed portion 316 may be arranged on the second side 312 of the bracket body 31, to increase a distance between the wall of the housing 11 on which the explosion-proof valve 6 is arranged and the exhaust hole 313, increase the space occupied by the exhaust path, and improve the exhaustion capability, so as to further reduce the risk that the battery cell 10 burns and explodes, reduce the impact on the adjacent battery cell 10, and help improve the use reliability and stability of the battery 100.

A gas passage hole 317 is provided on a side wall of the mounting recessed portion 316. The gas passage hole 317 is in communication with the second flow guide channel 305 and the second exhaust channel 303. The gas in the second flow guide channel 305 may flow to the second exhaust channel 303 through the gas passage hole 317, and finally may be discharged from the explosion-proof valve 6, to implement pressure relief, reduce the risk that the battery cell 10 burns and explodes, reduce the impact on the adjacent battery cell 10, and help improve the use reliability and stability of the battery 100.

In some embodiments, a weight reducing groove 319 is further provided on the second side 312 of the bracket body 31. This can not only reduce a weight of the bracket 3, and but also further increase the space occupied by the exhaust path, to improve the exhaustion capability and further improve the space utilization.

Referring to FIG. 10 and FIG. 11 again, the second abutting portion 322 is arranged in an arc shape, so that the second abutting portion 322 and the second extending portion 332 define the second flow guide channel 305 in an arc shape.

There are two second abutting portions 322, and the two second abutting portions 322 are respectively located on two sides of the exhaust hole 313. For example, the two first abutting portions 321 are respectively formed as arc-shaped plates. Two ends of each arc-shaped plate are spaced away, and are arranged opposite to the exhaust hole 313. For another example, the two first abutting portions 321 respectively form closed annular plates.

The plurality of gas passage gaps 315 located on the same side of the exhaust hole 313 are provided at intervals around a circumferential direction of a corresponding second abutting portion 322, so that the plurality of gas passage gaps 315 located on the same side of the exhaust hole 313 are arranged in an extending direction of a corresponding second flow guide channel 305. In this way, a plurality of gas passage channels 301 are all in communication with the same second flow guide channel 305, and gas flowing out of the plurality of gas passage channels 301 gathers in the second exhaust channel 303 under the guidance of the second flow guide channel 305, and finally may be discharged from the explosion-proof valve 6.

Therefore, in the technical solution, the second abutting portion 322 is arranged in the arc shape, the plurality of gas passage gaps 315 located on the same side of the exhaust hole 313 are provided at intervals around the circumferential direction of the corresponding second abutting portion 322, and the second flow guide channel 305 arranged in the arc shape may be defined, to increase a space occupied by the second flow guide channel 305, improve the space utilization of the bracket 3, and further improve the exhaustion capability. In addition, the infiltration time can be further shortened, and the infiltration efficiency can be further improved.

Referring to FIG. 3 and FIG. 4, and FIG. 10 and FIG. 11, a positive terminal 1201 and a negative terminal 1202 are further arranged on a wall of the housing 11 on which the explosion-proof valve 6 is arranged. Two through holes 314 are provided on the bracket body 31, the two through holes 314 are configured to expose the positive terminal 1201 and the negative terminal 1202, and the exhaust hole 313 is located between the two through holes 314. The two second abutting portions 322 are arranged in one-to-one correspondence with the two through holes 314, and each second abutting portion 322 is arranged around an outer periphery of a corresponding through hole 314.

In the technical solution, the two through holes 314 may be provided on the bracket body 31, to avoid the positive terminal 1201 and the negative terminal 1202, so that the positive terminal 1201 and the negative terminal 1202 may be connected to corresponding conductive portions 22 of the electrode assembly 2. The second abutting portion 322 is arranged around an outer periphery of a corresponding through hole 314, so that the second abutting portion 322 and the second extending portion 332 may define the second flow guide channel 305 arranged in the arc shape, to increase the space occupied by the second flow guide channel 305, improve the space utilization of the bracket 3, and also improve the exhaustion capability. In addition, backflow of the gas from the through hole 314 can be reduced.

Referring to FIG. 9 again, a positioning groove 318 is provided on a hole wall of the through hole 314 and is configured to match the positive terminal 1201 or the negative terminal 1202. The positioning groove 318 is provided, to help improve reliability of a connection between the positive terminal 1201 or the negative terminal 1202 and the bracket 3. In addition, the positioning groove 318 can also accelerate flow of the electrolyte solution, to shorten the infiltration time and improve the infiltration efficiency.

In some embodiments, an inner periphery of the second abutting portion 322 extends beyond the hole wall of the through hole 314. The positioning groove 318 includes a transverse groove section and a longitudinal groove section. The transverse groove section is provided on a surface on a side of the second abutting portion 322 toward the bracket body 31, the longitudinal groove section is provided on a wall surface of the bracket body 31 at the through hole 314, and both the transverse groove section and the longitudinal groove section may match the positive terminal 1201 or the negative terminal 1202, to further improve mounting reliability of the positive terminal 1201 or the negative terminal 1202.

Referring to FIG. 7 again, there are at least two electrode assemblies 2, the at least two electrode assemblies 2 are stacked, and at least one gas passage gap 315 is arranged opposite to a middle position of two adjacent electrode assemblies 2.

Specifically, after the electrode assembly 2 is shaped, two opposite side walls are formed as arc-shaped walls. Therefore, if two electrode assemblies 2 are stacked, a recess is defined between two arc-shaped walls (namely, a middle position of two electrode assemblies 2), and at least one gas passage gap 315 is arranged opposite to the recess.

In the technical solution, at least one gas passage gap 315 is arranged opposite to a middle position of two adjacent electrode assemblies 2, and gas between the two adjacent electrode assemblies 2 may rapidly flow from the first side 311 of the bracket body 31 to the second side 312 of the bracket body 31 through the gas passage gap 315, and then move to the position of the explosion-proof valve 6, to improve timeliness of pressure relief of the explosion-proof valve and improve the use reliability and stability of the battery.

Referring to FIG. 3 and FIG. 4 again, a terminal 12 is further arranged on a wall of the housing 11 on which the explosion-proof valve 6 is arranged. The terminal 12 is at least one of the positive terminal 1201 and the negative terminal 1202. A through hole 314 for exposing the terminal 12 is provided on the bracket body 31. The electrode assembly 2 includes an active material coating portion 21 and a conductive portion 22. The conductive portion 22 is connected to the active material coating portion 21, and the bracket 3 is supported on an end portion of the active material coating portion 21 on which the conductive portion 22 is arranged.

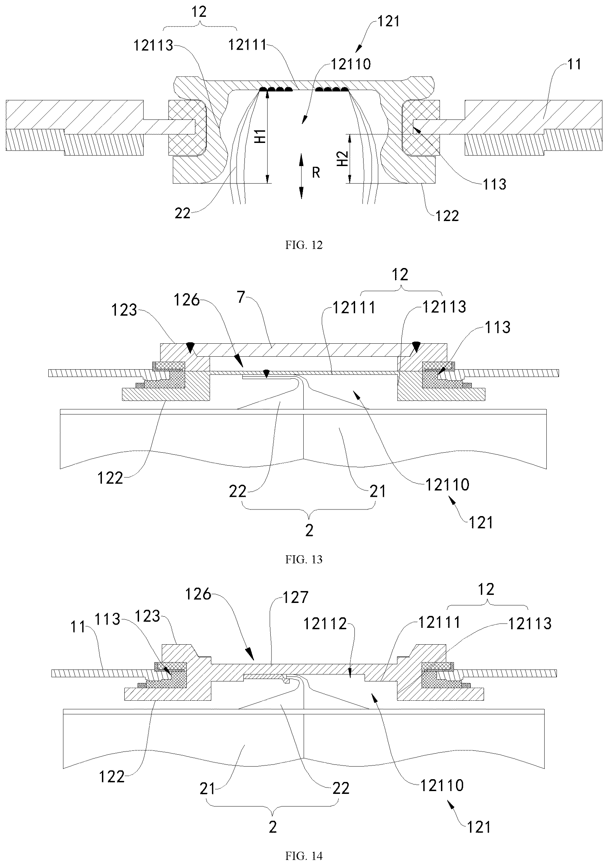

Referring to FIG. 12 and FIG. 13, FIG. 12 is a partial cross-sectional view of a battery cell 10 according to some embodiments of the present application; and FIG. 13 is a partial cross-sectional view of a battery cell 10 according to some embodiments of the present application. An accommodating portion 121 is arranged on the terminal 12. The accommodating portion 121 is in communication with the through hole 314. At least a part of the conductive portion 22 passes through the through hole 314 and then extends into and is accommodated in the accommodating portion 121, and the conductive portion 22 is electrically connected to the terminal 12. In other words, the terminal 12 is configured as a hollow structure.

The at least a part means that the conductive portion 22 may be completely accommodated in the accommodating portion 121, or the conductive portion 22 may be partially accommodated in the accommodating portion 121. Because the accommodating portion 121 is arranged on the terminal 12, a hollow structure of the accommodating portion 121 can reduce a weight of the terminal 12 to a certain extent, to improve gravimetric energy density of the battery cell 10 and the battery 100. In addition, the conductive portion 22 can be accommodated in the accommodating portion 121, to improve assembly efficiency of the conductive portion 22, further reduce a space occupied by the conductive portion 22, and fully use a space of the battery cell 10, so that both matching between the bracket 3 and the terminal 12 and matching between the bracket 3 and the conductive portion 22 are tighter and more reliable, and a structure of the battery cell 10 is more compact, thereby helping improve energy density of the battery cell 10.

More specifically, a part or a whole of the conductive portion 22 is accommodated in the accommodating portion 121, so that the part of the conductive portion 22 located in the accommodating portion 121 may occupy a space in the terminal 12, and a space in the housing 11 occupied by the conductive portion 22 can be reduced. When a size of the housing 11 is fixed, a space in the housing 11 can be saved, to accommodate the active material coating portion 21 with a larger size and improve volumetric energy density of the battery cell 10. For example, when the conductive portion 22 is led out from a side of the active material coating portion 21 close to the terminal 12, a space occupied by the conductive portion 22 between the active material coating portion 21 and the terminal 12 can be saved, and a size of the active material coating portion 21 in a lead-out direction of the conductive portion 22 can be increased, thereby reducing a distance between the active material coating portion 21 and the terminal 12 and improving the energy density of the battery cell 10.

In addition, at least a part of the conductive portion 22 is accommodated in the accommodating portion 121, so that a space occupied by the battery cell 10 can be reduced, and a larger quantity of battery cells 10 can be accommodated by the battery 100 having a same volume, thereby improving the volumetric energy density of the battery 100. In addition, at least a part of the conductive portion 22 is accommodated in the accommodating portion 121 to occupy the space in the terminal 12, so as to reduce redundancy of the conductive portion 22 in the housing 11 to at least a certain extent, reduce a probability of a short circuit between the conductive portion 22 and the active material coating portion 21, reduce a probability of a short circuit of the battery cell 10, and improve operation reliability and stability of the battery cell 10 and the battery 100.

It should be noted that in this embodiment of the present application, the accommodating portion 121 may be located on a side of the terminal 12 facing the active material coating portion 21, or may be located on a side of the terminal 12 away from the active material coating portion 21.

For example, referring to FIG. 12 and FIG. 13 again, when the accommodating portion 121 is located on the side of the terminal 12 facing the active material coating portion 21, the accommodating portion 121 includes a first accommodating groove 12110. A surface on a side of the terminal 12 facing the active material coating portion 21 is a terminal inner end surface 122, an opening of the first accommodating groove 12110 is formed on the terminal inner end surface 122, and at least a part of the conductive portion 22 is accommodated in the first accommodating groove 12110.

**For** example, the first accommodating groove 12110 is a groove body, and the groove body is a groove-shaped structure having a particular depth. For example, when the terminal 12 is arranged on an upper end wall of the housing 11, and the terminal inner end surface 122 is a lower surface of the terminal 12, the first accommodating groove 12110 is formed as an accommodating groove in which the opening opens downwardly and a groove wall is recessed upwardly. For another example, when the terminal 12 is arranged on a lower end wall of the housing 11, and the terminal inner end surface 122 is an upper surface of the terminal 12, the first accommodating groove 12110 is formed as an accommodating groove in which the opening opens upwardly and a groove wall is recessed downwardly.

In the technical solution, the first accommodating groove 12110 is provided on the terminal 12 to reduce the weight of the terminal 12 to a certain extent, so as to improve the gravimetric energy density of the battery cell 10 and the battery 100. In addition, because the opening of the first accommodating groove 12110 is formed on the terminal inner end surface 122, and the terminal inner end surface 122 is the surface on the side of the terminal 12 close to the active material coating portion 21, the first accommodating groove 12110 may open in a direction toward the active material coating portion 21, so as to facilitate extending of the conductive portion 22 into the first accommodating groove 12110, and improve the assembly efficiency. In addition, the first accommodating groove 12110 in this form is easy to be processed, and production efficiency is improved.

In addition, the first accommodating groove 12110 is easy to be processed to have a relatively large volume, and can accommodate a larger conductive portion 22. In addition, because the first accommodating groove 12110 opens in the direction toward the active material coating portion 21, the first accommodating groove 12110 may further serve as a buffer and temporary storage structure for the electrolyte solution, so that the housing 11 can accommodate more electrolyte solutions. Because the electrolyte solution is consumed during charging and discharging of the battery cell 10, when there are more electrolyte solutions, service life of the battery cell 10 can be prolonged. Because the first accommodating groove 12110 opens in the direction toward the active material coating portion 21, the first accommodating groove 12110 may also serve as an accommodating and buffer structure for generated gas inside the electrode assembly 2, to reduce expansion of the battery cell 10 and improve reliability and stability of the battery cell 10.

In addition, because the first accommodating groove 12110 is located on an inner side of the terminal 12, external foreign objects and impurities do not easily enter the first accommodating groove 12110, so that an impact of the external foreign object and impurities on the electrode assembly 2 can be reduced, and operation stability and reliability of the electrode assembly 2 can be improved, thereby improving stability and reliability of the battery cell 10 and the battery 100.

Referring to FIG. 12 again, in this embodiment of the present application, a connection manner between the terminal 12 and the housing 11 is not limited. For example, the connection manner may be welding, or may be riveting. For example, when the terminal 12 matches the housing 11 through riveting, a mounting hole 113 is provided on the housing 11, and the terminal 12 is riveted and mounted at the mounting hole 113. Certainly, it may be understood that when the terminal 12 matches the housing 11 through welding or in another manner, a mounting hole 113 may alternatively be provided on the housing 11, so that the terminal 12 can be mounted on the housing 11 through the mounting hole 113. This is not limited herein.

In addition, the first accommodating groove 12110 may be provided corresponding to a position of the mounting hole 113. In other words, on a projection surface perpendicular to an axial direction R of the terminal 12, an orthographic projection of the first accommodating groove 12110 is located within a range of an orthographic projection of the mounting hole 113, so that the first accommodating groove 12110 may have a relatively large depth, to accommodate the larger conductive portion 22, so as to reduce the space occupied by the conductive portion 22 in the housing 11 to a larger extent. Specifically, when the mounting hole 113 is provided on the housing 11, and the terminal 12 is mounted in the mounting hole 113, in the axial direction R of the terminal 12, a depth H1 of the first accommodating groove 12110 is greater than or equal to a smallest distance H2 between the terminal inner end surface 122 and the mounting hole 113.

It should be noted that a specific shape of the first accommodating groove 12110 is not limited, and may be a regular shape or may be an irregular shape. For example, the first accommodating groove 12110 is a cylindrical groove whose cross section is a rectangular section, an elliptical section, a racetrack-shaped section, or the like, is a trapezoidal groove whose cross section is rectangular and section size is gradually changed, is a hemispherical groove whose cross section is circular and section size is gradually changed, is an elliptical spherical groove whose cross section is elliptical and section size is gradually changed, or the like. Therefore, the depth H1 of the first accommodating groove 12110 is a largest depth of the first accommodating groove 12110 in the axial direction R of the terminal 12.

Because in the axial direction R of the terminal 12, the depth H1 of the first accommodating groove 12110 is greater than or equal to the smallest distance H2 between the terminal inner end surface 122 and the mounting hole 113, a volume of the terminal 12 can be fully used, so that the first accommodating groove 12110 has a relatively large depth, to help accommodate the larger conductive portion 22, so as to reduce the space occupied by the conductive portion 22 in the housing 11 to a larger extent, further improve the energy density of the battery cell 10, and further reduce the redundancy of the conductive portion 22 in the housing 11. In addition, because the first accommodating groove 12110 has a relatively large depth, the first accommodating groove 12110 can also accommodate gas generated by the electrode assembly 2, thereby improving the reliability and stability of the battery cell 10, and the first accommodating groove 12110 can further accommodate more electrolyte solutions, so as to improve the service life of the battery cell 10.

Referring to FIG. 12 and FIG. 13 again, to improve stability and reliability of an electrical connection between the active material coating portion 21 and the terminal 12, in some embodiments of the present application, an electrical connection position between the conductive portion 22 and the terminal 12 may be located on a groove wall of the first accommodating groove 12110 formed in the accommodating portion 121.

For example, an electrical connection may be formed between the conductive portion 22 and the terminal 12 through welding, and the electrical connection position is a welding position between the conductive portion 22 and the terminal 12. In addition, a welding manner of the conductive portion 22 and the terminal 12 is not limited, for example, may be laser welding. In addition, vertical welding, oblique welding, or the like and lap welding, edge sealing welding, or the like may be selected according to a factor such as a position, an angle, or a structure of a welding portion. In another embodiment of the present application, instead of welding, the conductive portion 22 and the terminal 12 may be electrically connected in another manner, for example, a manner of arranging a conductive adhesive or a conductive nail. For ease of description, descriptions are provided below by using an example in which the conductive portion 22 is electrically connected to the terminal 12 through welding, and a welding position is the electrical connection position between the conductive portion 22 and the terminal 12.

Specifically, the terminal 12 specifically includes a first end wall 12111 and a first side wall 12113. The first end wall 12111 is located on a side of the first side wall 12113 away from the active material coating portion 21. The first end wall 12111 and the first side wall 12113 enclose the first accommodating groove 12110. The electrical connection position between the conductive portion 22 and the terminal 12 is located on the first end wall 12111 and/or the first side wall 12113. In other words, the conductive portion 22 may be welded to at least one of the first end wall 12111 and the first side wall 12113.

In the technical solution, the electrical connection position between the conductive portion 22 and the terminal 12 is arranged on at least one of the first end wall 12111 and the first side wall 12113, so that the first accommodating groove 12110 has a function of accommodating at least a part of the conductive portion 22, and the groove wall of the first accommodating groove 12110 further has a function of implementing the electrical connection with the conductive portion 22, so that a structure of the terminal 12 can be simplified, thereby facilitating processing of the terminal 12. In addition, a structure of the conductive portion 22 can be simplified, thereby reducing the redundancy of the conductive portion 22, and reducing costs of the conductive portion 22. In addition, the electrical connection with the conductive portion 22 is implemented through the groove wall of the first accommodating groove 12110, so that a region in which the conductive portion 22 is electrically connected to the terminal 12 may be set to be relatively large. This can not only reduce difficulty of the electrical connection, but also improve reliability and stability of the electrical connection, thereby improving performance of the battery cell 10.

In addition, because the electrical connection position between the conductive portion 22 and the terminal 12 is located in the first accommodating groove 12110, this can not only prevent the electrical connection position from protruding from the outside of the terminal 12 and occupying a space outside the terminal 12, but also enable the electrical connection position to be protected by the terminal 12, thereby improving the reliability and stability of the electrical connection between the conductive portion 22 and the terminal 12.

In addition, in this embodiment of the present application, the first end wall 12111 is constructed as a closed structure in which a via hole 12130 is not provided, so that the first accommodating groove 12110 is isolated from an external space of the housing 11, thereby avoiding a problem that the electrolyte solution inside the housing 11 leaks from the first accommodating groove 12110.

Referring to FIG. 12 and FIG. 13 again, in some optional embodiments, a local shape of the conductive portion 22 matches a local shape of the first end wall 12111, and the conductive portion 22 is attached to and electrically connected to the first end wall 12111, so that an electrical connection position between the conductive portion 22 and the first end wall 12111 extends in a length direction or a width direction of the first end wall 12111. For example, when the first end wall 12111 is planar, a part of the conductive portion 22 may also be planar and attached to the first end wall 12111, and an electrical connection, for example, welding, is performed on an attached position. Therefore, an area of the electrical connection can be improved, and the reliability and stability of the electrical connection can be improved.

In addition, when the electrical connection between the conductive portion 22 and the first end wall 12111 is welding, because the first end wall 12111 is located on the side of the first accommodating groove 12110 away from the active material coating portion 21, it is convenient to perform a welding operation. For example, welding may be performed on a side of the terminal 12 away from the active material coating portion 21.

It should be noted that the shape of the first end wall 12111 is not limited, and may be, for example, a flat plate shape or an arc-shaped plate shape. When the first end wall 12111 is a flat plate-shaped structure, the first end wall 12111 and the axial direction R of the terminal 12 are arranged at an angle. For example, the first end wall 12111 may be a flat plate-shaped structure perpendicular to the axial direction R of the terminal 12. For another example, the first end wall 12111 may alternatively be an inclined plate-shaped structure not perpendicular to the axial direction R of the terminal 12. However, an inclined direction is not limited.

Certainly, in another embodiment of the present application, an electrical connection position between the conductive portion 22 and the first end wall 12111 may alternatively not extend in a length direction or a width direction of the first end wall 12111, for example, may alternatively be a plurality of discrete points. For example, the conductive portion 22 has a plurality of portions arranged at intervals, and the plurality of portions are separately welded to the first end wall 12111. Details are not described herein again.

Referring to FIG. 14, FIG. 14 is a partial cross-sectional view of a battery cell 10 according to some embodiments of the present application. When the conductive portion 22 is electrically connected to the first end wall 12111, a first sinking groove 12112 may be provided on the first end wall 12111, and a sinking direction of the first sinking groove 12112 is a direction away from the active material coating portion 21. At least a part of the electrical connection position between the conductive portion 22 and the first end wall 12111 is located in the first sinking groove 12112. For example, at least a part of the conductive portion 22 may be arranged in the first sinking groove 12112 and connected to a portion of the first end wall 12111 for defining the first sinking groove 12112.

In the technical solution, the electrical connection position of the conductive portion 22 may be pre-positioned and limited through the first sinking groove 12112, and this not only helps find a correct position to implement the electrical connection and improve production efficiency, but also helps improve stability and reliability of the conductive portion 22 and improve stability and reliability of the battery cell 10 during charging and discharging. In addition, the first sinking groove 12112 is provided on the first end wall 12111, so that a local wall thickness of the first end wall 12111 can be partially thinned. This not only helps facilitate welding, but also helps reduce the weight of the terminal 12, thereby improving the gravimetric energy density of the battery cell 10.

Referring to FIG. 13 and FIG. 14 again, in this embodiment of the present application, a first groove 126 may be further provided on the terminal 12 according to a requirement. The first groove 126 is located on a side of the terminal 12 away from the active material coating portion 21, that is, a surface on the side of the terminal 12 away from the active material coating portion 21 is a terminal outer end surface 123, and an opening of the first groove 126 is formed on the terminal outer end surface 123.

It may be understood that the first groove 126 is a groove body, and the groove body is a groove-like structure having a particular depth. In addition, when the terminal 12 is arranged on an upper end wall of the housing 11, and the terminal outer end surface 123 is an upper surface of the terminal 12, the first groove 126 is formed as a first groove 126 in which the opening opens upwardly and a groove wall is recessed downwardly (that is, is recessed toward the electrode assembly 2). For another example, when the terminal 12 is arranged on a lower end wall of the housing 11, and the terminal outer end surface 123 is a lower surface of the terminal 12, the first groove 126 is formed as a first groove 126 in which the opening opens downwardly and a groove wall is recessed upwardly (that is, is recessed away from the electrode assembly 2).

In the technical solution, the first groove 126 is provided on the terminal 12 to further reduce the weight of the terminal 12, so as to improve the gravimetric energy density of the battery cell 10 and the battery 100. In addition, the first groove 126 is located on an outer side of the terminal 12, that is, opens toward a side of the terminal 12 away from the interior of the housing 11. Structural parts that electrically connect various battery cells 10 in the battery 100 can be accommodated or mounted in the first groove 126, to fully use the space inside the terminal 12 and improve space utilization and the volume energy density of the battery 100.

In addition, because the terminal 12 has both the first accommodating groove 12110 and the first groove 126, the first groove 126 is located on a side of the first accommodating groove 12110 away from the active material coating portion 21, and the first groove 126 opens in a direction away from the first accommodating groove 12110, so that laser welding is performed on the conductive portion 22 and the first end wall 12111 through the first groove 126 from the outer side of the terminal 12, namely, the side of the terminal 12 away from the active material coating portion 21, and the conductive portion 22 is electrically connected to the terminal 12 through external welding. In other words, through the foregoing structural arrangement, external welding can be performed on the terminal 12 and the conductive portion 22 through the first groove 126, to help process and manufacture the battery cell 10 and reduce processing and manufacturing costs.

Further, to conveniently and effectively perform welding on the conductive portion 22 and the groove wall of the first accommodating groove 12110 through the first groove 126 and improve reliability of welding of the conductive portion 22 and the groove wall of the first accommodating groove 12110, in this embodiment of the present application, a portion between the first groove 126 and the first accommodating groove 12110 may be laser welded to the conductive portion 22, that is, a spacer portion 127 shown in FIG. 14 is laser welded to the conductive portion 22, to implement an electrical connection between the electrode assembly 2 and the terminal 12. The spacer portion 127 of the terminal 12 located between the first groove 126 and the first accommodating groove 12110 has a relatively thin thickness. The spacer portion 127 isolates the first groove 126 from the first accommodating groove 12110, and a wall surface on a side of the spacer portion 127 close to the active material coating portion 21 may serve as the first end wall 12111. When the conductive portion 22 and the first end wall 12111 need to be welded, because the spacer portion 127 has a relatively thin thickness, the conductive portion 22 and the first end wall 12111 are welded through the first groove 126, thereby improving convenience and reliability of welding.

Referring to FIG. 13 again, further, the battery cell 10 may further include a groove cover 7. The groove cover 7 is arranged on the terminal 12 and covers the opening of the first groove 126. In the technical solution, the groove cover 7 covering the first groove 126 is arranged, so that the terminal 12 may be indirectly electrically connected to the bus component through the groove cover 7. A position and a structure of the groove cover 7 may be arranged, so that an electrical connection between the groove cover 7 and the bus component is more convenient and an electrical connection area is larger. Therefore, the groove cover 7 is arranged, so that adjacent battery cells 10 in the battery 100 can be electrically connected. In addition, because an electrical connection position between battery cells 10 is located at the groove cover 7, the electrical connection position can be isolated from the electrical connection position between the conductive portion 22 and the terminal 12 through the first groove 126 with less interference, thereby further improving the stability and reliability of the battery cell 10.

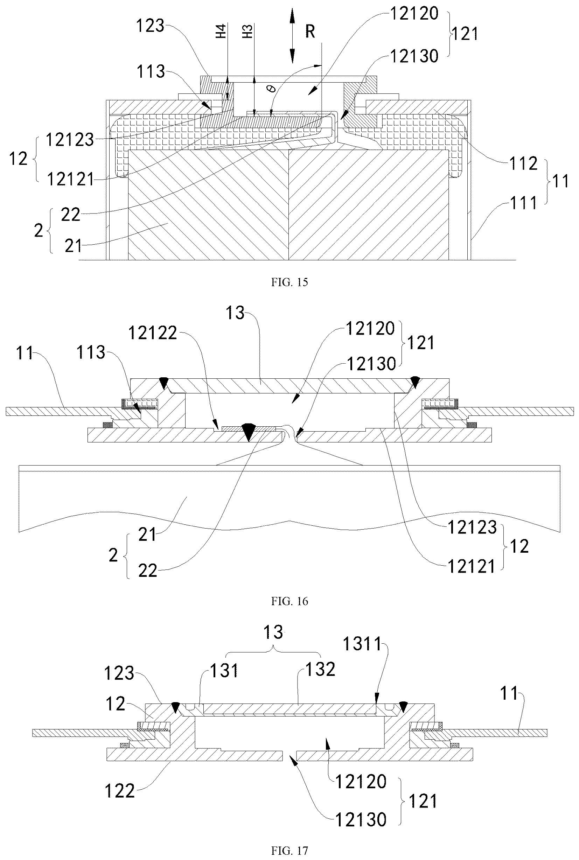

For example, referring to FIG. 15, FIG. 15 is a partial cross-sectional view of a battery cell 10 according to some embodiments of the present application. The accommodating portion 121 may alternatively set to include a second accommodating groove 12120. A surface on a side of the terminal 12 away from the active material coating portion 21 is a terminal outer end surface 123. An opening of the second accommodating groove 12120 is formed on the terminal outer end surface 123, the second accommodating groove 12120 is in communication with the interior of the housing 11 through the via hole 12130, and the conductive portion 22 passes through the via hole 12130 and at least a part of the conductive portion 22 is accommodated in the second accommodating groove 12120.

It may be understood that the second accommodating groove 12120 is a groove body, and the groove body is a groove-like structure having a particular depth. For example, when the terminal 12 is arranged on an upper end wall of the housing 11, and the terminal outer end surface 123 is an upper surface of the terminal 12, the second accommodating groove 12120 is formed as an accommodating groove in which the opening opens upwardly and a groove wall is recessed downwardly. For another example, when the terminal 12 is arranged on a lower end wall of the housing 11, and the terminal outer end surface 123 is a lower surface of the terminal 12, the second accommodating groove 12120 is formed as an accommodating groove in which the opening opens downwardly and a groove wall is recessed upwardly.

In the technical solution, referring to FIG. 15 again, the second accommodating groove 12120 is provided on the terminal 12 to reduce the weight of the terminal 12 to a certain extent, so as to improve the gravimetric energy density of the battery cell 10 and the battery 100. In addition, because the opening of the second accommodating groove 12120 is formed on the terminal outer end surface 123, and the terminal outer end surface 123 is the surface on the side of the terminal 12 away from the active material coating portion 21, the second accommodating groove 12120 may open in a direction away from the active material coating portion 21. In this way, when at least a part of the conductive portion 22 is accommodated in the second accommodating groove 12120, the conductive portion 22 can be easily accommodated and arranged through the opening of the second accommodating groove 12120, and an electrical connection operation and the like can be easily performed on the conductive portion 22 and the terminal 12 through the opening of the second accommodating groove 12120, thereby reducing production difficulty of the battery cell 10 and improving the production efficiency of the battery cell 10.

In addition, because the second accommodating groove 12120 can be in communication with the interior of the housing 11 through the via hole 12130, the second accommodating groove 12120 may further serve as a buffer and temporary storage structure for the electrolyte solution, so that the housing 11 can accommodate more electrolyte solutions. Because the electrolyte solution is consumed during charging and discharging of the battery cell 10, when there are more electrolyte solutions, service life of the battery cell 10 can be prolonged. Because the second accommodating groove 12120 can be in communication with the interior of the housing 11 through the via hole 12130, the second accommodating groove 12120 may also serve as an accommodating and buffer structure for gas generated inside the electrode assembly 2, to reduce expansion of the battery cell 10 and improve the reliability and stability of the battery cell 10.

It should be noted that, when the accommodating portion 121 has the second accommodating groove 12120, and the conductive portion 22 passes through the via hole 12130 and at least a part of the conductive portion 22 is accommodated in the second accommodating groove 12120, the electrical connection position between the conductive portion 22 and the terminal 12 is not limited. For example, when the conductive portion 22 passes through the via hole 12130 and at least a part of the conductive portion 22 is accommodated in the second accommodating groove 12120, in this embodiment of the present application, the electrical connection position between the conductive portion 22 and the terminal 12 is located on a hole wall of the via hole 12130 formed on the terminal 12.

In the technical solution, the electrical connection position between the conductive portion 22 and the terminal 12 is arranged on the hole wall of the via hole 12130, so that an electrical connection operation is conveniently performed on the conductive portion 22 and the terminal 12 through the second accommodating groove 12120. In addition, when an electrical connection area between the conductive portion 22 and the terminal 12 is relatively large, the via hole 12130 can be sealed through the electrical connection between the conductive portion 22 and the terminal 12, thereby reducing sealing costs, reducing leakage of the electrolyte solution, and reducing sealing parts.

Specifically, the conductive portion 22 and the hole wall of the via hole 12130 may be welded at a position at which the via hole 12130 is connected to the second accommodating groove 12120, and an operation is convenient. In addition, a welding mark may be controlled, and the via hole 12130 is sealed through the welding mark and the conductive portion 22, to alleviate a problem that the electrolyte solution in the housing 11 leaks from the via hole 12130.

For another example, when the conductive portion 22 passes through the via hole 12130 and at least a part of the conductive portion 22 is accommodated in the second accommodating groove 12120, in some other embodiments of the present application, the electrical connection position between the conductive portion 22 and the terminal 12 may alternatively be located on a groove wall of the second accommodating groove 12120 formed on the terminal 12. This facilitates the electrical connection operation. For example, when the conductive portion 22 and the groove wall of the second accommodating groove 12120 formed on the terminal 12 are welded, a problem that conductive particles generated through welding enter the housing 11, causing a short circuit can be alleviated.

Referring to FIG. 15 again, the terminal 12 includes a second end wall 12121 and a second side wall 12123. The second end wall 12121 is located on a side of the second side wall 12123 close to the active material coating portion 21. The second end wall 12121 and the second side wall 12123 enclose the second accommodating groove 12120. The via hole 12130 is provided on the second end wall 12121. The electrical connection position between the conductive portion 22 and the terminal 12 is located on the second end wall 12121 and/or located on the second side wall 12123.

More specifically, the electrical connection may be formed between the conductive portion 22 and the terminal 12 through welding. Therefore, a welding position is the electrical connection position between the conductive portion 22 and the terminal 12. In another embodiment of the present application, instead of welding, the conductive portion 22 and the terminal 12 may be electrically connected in another manner, for example, a manner of arranging a conductive adhesive or a conductive nail. Details are not described herein again.

For ease of description, descriptions are provided below by using an example in which the conductive portion 22 is electrically connected to the terminal 12 through welding, and a welding position is the electrical connection position between the conductive portion 22 and the terminal 12. For example, in some embodiments, the electrical connection position between the conductive portion 22 and the terminal 12 is located on the second end wall 12121 and/or the second side wall 12123. The conductive portion 22 may be welded to at least one of the second end wall 12121 and the second side wall 12123.

In the technical solution, the electrical connection position between the conductive portion 22 and the terminal 12 is arranged on at least one of the second end wall 12121 and the second side wall 12123, so that the second accommodating groove 12120 has a function of accommodating at least a part of the conductive portion 22, and the groove wall of the second accommodating groove 12120 further has a function of implementing the electrical connection with the conductive portion 22, so that a structure of the terminal 12 can be simplified, thereby facilitating processing of the terminal 12. In addition, because the via hole 12130 is provided on the second end wall 12121, the conductive portion 22 conveniently extends into the second accommodating groove 12120 through the via hole 12130, so that a structure of the conductive portion 22 can be simplified, thereby reducing the redundancy of the conductive portion 22, and reducing costs of the conductive portion 22. In addition, in an opening direction of the opening of the second accommodating groove 12120, an electrical connection operation may be easily performed on the conductive portion 22 and the groove wall of the second accommodating groove 12120 through the opening of the second accommodating groove 12120, so that difficulty of the electrical connection can be reduced. In addition, he electrical connection with the conductive portion 22 is implemented through the groove wall of the second accommodating groove 12120, so that a region in which the conductive portion 22 is electrically connected to the terminal 12 may be set to be relatively large, and reliability and stability of the electrical connection can be improved, thereby improving performance of the battery cell 10.

In addition, because the electrical connection position between the conductive portion 22 and the terminal 12 is located in the second accommodating groove 12120, this can not only prevent the electrical connection position from protruding from the outside of the terminal 12 and occupying a space outside the terminal 12, but also enable the electrical connection position to be protected by the terminal 12, thereby improving the reliability and stability of the electrical connection between the conductive portion 22 and the terminal 12.

Referring to FIG. 15 again, in some embodiments, a local shape of the conductive portion 22 matches a local shape of the second end wall 12121, and the conductive portion 22 is attached to and electrically connected to the second end wall 12121, so that an electrical connection position between the conductive portion 22 and the second end wall 12121 extends in a length direction or a width direction of the second end wall 12121. For example, when the second end wall 12121 is planar, a part of the conductive portion 22 may also be planar and attached to the second end wall 12121, and an electrical connection, for example, welding, is performed on an attached position. Therefore, an area of the electrical connection can be improved, and the reliability and stability of the electrical connection can be improved.

It should be noted that the shape of the second end wall 12121 is not limited, and may be, for example, a flat plate shape or an arc-shaped plate shape. When the second end wall 12121 is a flat plate-shaped structure, the second end wall 12121 and the axial direction R of the terminal 12 are arranged at an angle. For example, the second end wall 12121 may be a flat plate-shaped structure perpendicular to the axial direction R of the terminal 12. For another example, the second end wall 12121 may alternatively be an inclined plate-shaped structure not perpendicular to the axial direction R of the terminal 12. However, an inclined direction is not limited.

For example, referring to FIG. 15 again, when the second end wall 12121 is the flat plate-shaped structure, an angle θ between the second end wall 12121 and the axial direction R of the terminal 12 is equal to 90°. In other words, in a direction from the via hole 12130 to the second side wall 12123, the second end wall 12121 and the active material coating portion 21 are equally spaced. Therefore, the conductive portion 22 and the second end wall 12121 are conveniently welded.

For another example, the angle θ between the second end wall 12121 and the axial direction R of the terminal 12 is greater than 90°. In other words, in the direction from the via hole 12130 to the second side wall 12123, the second end wall 12121 obliquely extends in a direction close to the active material coating portion 21. Therefore, an extending distance of the conductive portion 22 along the second end wall 12121 may be increased, so as to improve the reliability of the electrical connection. For example, the angle θ between the second end wall 12121 and the axial direction R of the terminal 12 may range from 90° to 145°, for example, 100°, 110°, 120°, 130°, or 140°. The second end wall 12121 can be easily processed and is conveniently electrically connected to the conductive portion 22. In addition, the space in the terminal 12 can be relatively fully used to accommodate the conductive portion 22.

For another example, the angle θ between the second end wall 12121 and the axial direction R of the terminal 12 is less than 90°. In other words, in the direction from the via hole 12130 to the second side wall 12123, the second end wall 12121 obliquely extends in a direction away from the active material coating portion 21.

Therefore, an extending distance of the conductive portion 22 along the second end wall 12121 may be increased, so as to improve the reliability of the electrical connection. For example, the angle θ between the second end wall 12121 and the axial direction R of the terminal 12 may range from 45° to 90°, for example, 50°, 60°, 70°, or 80°. The second end wall 12121 can be easily processed and is conveniently electrically connected to the conductive portion 22. In addition, the space in the terminal 12 can be relatively fully used to accommodate the conductive portion 22.

Certainly, this is not limited in the present application. In another embodiment of the present application, an electrical connection position between the conductive portion 22 and the second end wall 12121 may alternatively not extend in a length direction or a width direction of the second end wall 12121, for example, may alternatively be a plurality of discrete points. For example, the conductive portion 22 has a plurality of portions arranged at intervals, and the plurality of portions are separately welded to the second end wall 12121. Details are not described herein again.

Referring to FIG. 15 again, and further referring to FIG. 16, FIG. 16 is a partial cross-sectional view of a battery cell 10 according to some embodiments of the present application. Regardless of a specific value of the angle θ between the second end wall 12121 and the axial direction R of the terminal 12, in this embodiment of the present application, when the conductive portion 22 is electrically connected to the second end wall 12121, a second sinking groove 12122 may be provided on the second end wall 12121 according to a requirement. The second sinking groove 12122 is a groove formed by a part of the second end wall 12121 sinking toward an end close to the active material coating portion 21. At least a part of the electrical connection position between the conductive portion 22 and the second end wall 12121 is located in the second sinking groove 12122.

In the technical solution, a shape of a part of the conductive portion 22 located in the second sinking groove 12122 is set to match a shape of the second sinking groove 12122, and the part is attached to and electrically connected to the second sinking groove 12122. The electrical connection position of the conductive portion 22 may be pre-positioned and limited through the second sinking groove 12122, and this not only helps find a correct position to implement the electrical connection and improve production efficiency, but also helps improve stability and reliability of the electrical connection position, so as to improve stability and reliability of charging and discharging operations of the battery cell 10.

Referring to FIG. 16 again, in this embodiment of the present application, a connection manner between the terminal 12 and the housing 11 is not limited. For example, the connection manner may be welding, or may be riveting. For example, when the terminal 12 matches the housing 11 through riveting, a mounting hole 113 is provided on the housing 11, and the terminal 12 is riveted and mounted at the mounting hole 113. Certainly, it may be understood that when the terminal 12 matches the housing 11 through welding or in another manner, a mounting hole 113 may alternatively be provided on the housing 11, so that the terminal 12 is mounted at the mounting hole 113.

Optionally, referring to FIG. 15 again, the second accommodating groove 12120 may be provided corresponding to a position of the mounting hole 113. In other words, on a projection surface perpendicular to the axial direction R of the terminal 12, an orthographic projection of the second accommodating groove 12120 is located within a range of an orthographic projection of the mounting hole 113, so that the second accommodating groove 12120 may have a relatively large depth, to accommodate the larger conductive portion 22, so as to reduce the space occupied by the conductive portion 22 in the housing 11 to a larger extent.

In some embodiments, referring to FIG. 15 again, when the mounting hole 113 is provided on the housing 11, and the terminal 12 is mounted in the mounting hole 113, in the axial direction R of the terminal 12, a depth H3 of the second accommodating groove 12120 is greater than or equal to a smallest distance H4 between the terminal outer end surface 123 and the mounting hole 113.

It should be noted that a specific shape of the second accommodating groove 12120 is not limited, and may be a regular shape or may be an irregular shape. For example, the second accommodating groove 12120 is a cylindrical groove whose cross section is a rectangular section, an elliptical section, a racetrack-shaped section, or the like, is a trapezoidal groove whose cross section is rectangular and section size is gradually changed, is a hemispherical groove whose cross section is circular and section size is gradually changed, is an elliptical spherical groove whose cross section is elliptical and section size is gradually changed, or the like. It should be noted that the racetrack shape described in this specification is a shape in which two short sides of a rectangle are replaced with convex curves.

Therefore, the depth H3 of the second accommodating groove 12120 is a largest depth of the second accommodating groove 12120 in the axial direction R of the terminal 12. Because in the axial direction R of the terminal 12, the depth H3 of the second accommodating groove 12120 is greater than or equal to the smallest distance H4 between the terminal outer end surface 123 and the mounting hole 113, a volume of the terminal 12 can be fully used, so that the second accommodating groove 12120 has a relatively large depth, to help accommodate the larger conductive portion 22, so as to reduce the space occupied by the conductive portion 22 in the housing 11 to a larger extent, further improve the energy density of the battery cell 10, and further reduce the redundancy of the conductive portion 22 in the housing 11. In addition, because the second accommodating groove 12120 has a relatively large depth, the second accommodating groove 12120 can also accommodate gas generated by the electrode assembly 2, thereby improving the reliability and stability of the battery cell 10, and the second accommodating groove 12120 can further accommodate more electrolyte solutions, so as to improve the service life of the battery cell 10.

Referring to FIG. 16 again, and further referring to FIG. 17, FIG. 17 is a partial cross-sectional view of a battery cell 10 according to some embodiments of the present application. In this embodiment of the present application, when the accommodating portion 121 has the second accommodating groove 12120 according to any one of the foregoing embodiments, optionally, the battery cell 10 may further include a cover plate 13. The cover plate 13 matches the terminal 12 and closes the opening of the second accommodating groove 12120. The cover plate 13 is electrically connected to the terminal 12.

In the technical solution, the cover plate 13 is arranged and closes the opening of the second accommodating groove 12120, so that the electrolyte solution in the housing 11 may be prevented from leaking out of the opening of the second accommodating groove 12120. In addition, because the cover plate 13 closes the opening of the second accommodating groove 12120 and is electrically connected to the terminal 12, the terminal 12 is indirectly electrically connected to the bus component easily through the cover plate 13, thereby helping increasing a connection area of the electrical connection position and further helping reduce a resistance at the electrical connection position.

It should be noted that a matching manner and a matching position between the cover plate 13 and the terminal 12 are not limited, provided that the cover plate 13 can close the opening of the second accommodating groove 12120. For example, in some embodiments, the cover plate 13 may be welded to the terminal 12. During processing, the conductive portion 22 may first pass through the via hole 12130 and may be welded to the groove wall of the second accommodating groove 12120, and then the cover plate 13 is welded to the terminal 12, to close the opening of the second accommodating groove 12120.

It should be further noted that a specific constitution of the cover plate 13 is not limited. For example, in some optional embodiments, referring to FIG. 17, the cover plate 13 includes a first conductive member 131 and a second conductive member 132 that are made of different materials. The first conductive member 131 matches and is electrically connected to the terminal 12, and the second conductive member 132 matches and is electrically connected to the first conductive member 131.

In the technical solution, the cover plate 13 is set to a composite form. The material of the first conductive member 131 is set to be the same as the material of the terminal 12, so that the first conductive member 131 is electrically connected to the terminal 12. For example, the first conductive member 131 and the terminal 12 can be easily connected reliably and stably through welding. In addition, because the materials of the second conductive member 132 and the first conductive member 131 are different, the second conductive member 132 is electrically connected to a bus component whose material is different from that of the terminal 12. For example, the second conductive member 132 can be easily connected reliably and stably to a bus component whose material is the same as that of the second conductive member 132 through welding.

For example, when the terminal 12 is a negative terminal 12, the terminal 12 is a copper terminal, and the bus component is an aluminum sheet. In this case, the first conductive member 131 may be set to be made of a copper material, and the second conductive member 132 is set to be made of an aluminum material. In this case, the terminal 12 and the first conductive member 131 that are of the same material can be effectively welded, and the second conductive member 132 and the bus component that are of the same material can be effectively welded, so that the terminal 12 can be indirectly electrically connected to the bus component through the cover plate 13 effectively. In addition, the terminal 12 and the first conductive member 131 are welded between copper materials, the fluidity is good, and cracks are not easily generated, thereby helping improve a sealing effect at a position of the welding.

Referring to FIG. 17 again, in some optional examples, the first conductive member 131 is located between the second accommodating groove 12120 and the second conductive member 132. In the technical solution, because the first conductive member 131 is located between the second accommodating groove 12120 and the second conductive member 132, the second accommodating groove 12120 and the second conductive member 132 may be separated. Therefore, when the electrolyte solution in the housing 11 enters the second accommodating groove 12120 from the via hole 12130, the part of the electrolyte solution can be prevented from being in contact with the second conductive member 132 through the first conductive member 131, thereby resolving a problem that the electrolyte solution causes corrosion to the second conductive member 132.

It should be noted that a manner of matching between the first conductive member 131 and the second conductive member 132 is not limited. For example, in some embodiments, referring to FIG. 17, a second groove 1311 is provided on the first conductive member 131, the second conductive member 132 is embedded in the second groove 1311, and an opening of the second groove 1311 is formed on a surface on a side of the first conductive member 131 away from the second accommodating groove 12120, so that the second conductive member 132 is exposed from the opening of the second groove 131 1. Alternatively, in another embodiment, a connection manner between the first conductive member 131 and the second conductive member 132 may alternatively be a secure connection manner, an engagement manner, or the like.

It should be further noted that "exposed" in the case that the second conductive member 132 is exposed from the opening of the second groove 1311 means that the first conductive member 131 does not shield the second conductive member 132 at a position of the opening of the second groove 1311, and the second conductive member 132 does not need to protrude from the opening of the second groove 1311. For example, the second conductive member 132 may be flush with the surface on the side of the first conductive member 131 away from the second accommodating groove 12120, or the second conductive member 132 may protrude from the surface on the side of the first conductive member 131 away from the second accommodating groove 12120.

In the technical solution, the second conductive member 132 is embedded in the first conductive member 131, so that difficulty of assembling the first conductive member 131 and the second conductive member 132 can be reduced, and stability and convenience of matching between the first conductive member 131; and the second conductive member 132 can be improved. In addition, a thickness of the cover plate 13 can be reduced, and a space occupied by the cover plate 13 is reduced, thereby improving the space utilization of the battery cell 10. According to another aspect, in addition, because the second conductive member 132 may be exposed, through the opening of the second groove 1311, from the surface on the side of the first conductive member 131 away from the second accommodating groove 12120, so that the second conductive member 132 is electrically connected to the bus component outside the terminal 12.

In addition, because the opening of the second groove 1311 is formed on the surface on the side of the first conductive member 131 away from the second accommodating groove 12120, it indicates that the second groove 1311 opens in a direction away from the active material coating portion 21, so that a part of the first conductive member 131 for defining a groove wall of the second groove 1311 is located between the second accommodating groove 12120 and the second conductive member 132, to separate the second accommodating groove 12120 and the second conductive member 132, so as to prevent the electrolyte solution entering the second groove 1311 from being in contact with the second conductive member 132, and reduce leakage of the electrolyte solution.

Certainly, in another embodiment, the cover plate 13 may not be a composite form made of a plurality of materials. For example, in other embodiments of the present application, the entire cover plate 13 may be configured as a non-composite form made of the same material, for example, to adapt to the positive terminal 12. Details are not described herein again.

Referring to FIG. 17 again, the cover plate 13 is further embedded at the opening of the second accommodating groove 12120. In the technical solution, the cover plate 13 is embedded in the second accommodating groove 12120, so that difficulty of assembling the cover plate 13 and the terminal 12 can be reduced, stability of assembling the cover plate 13 and the terminal 12 and connection reliability and convenience can be improved, and a space occupied by the cover plate 13 outside the terminal 12 can be reduced. In addition, because the cover plate 13 is embedded at the opening of the second accommodating groove 12120, the second accommodating groove 12120 can have a relatively sufficient space to accommodate the conductive portion 22.

Certainly, in another embodiment of the present application, a manner of matching between the cover plate 13 and the terminal 12 is not limited to being embedded in the second accommodating groove 12120. The cover plate 13 may alternatively cover the terminal 12, that is, directly cover the opening of the second accommodating groove 12120, so as to facilitate matching with the bus component of the battery 100. This is not limited in this embodiment.

In an optional solution, there are two terminals 12, which are respectively a positive terminal 1201 and a negative terminal 1202. There are two through holes 314. The two through holes 314 respectively expose the positive terminal 1201 and the negative terminal 1202. In a process of assembling the electrode assembly 2 into the housing 11, two conductive portions 22 of the electrode assembly 2 may simultaneously and respectively pass through the two through holes 314 on the bracket 3, so that the two conductive portions 22 are conveniently and respectively connected to the positive terminal 1201 and the negative terminal 1202, thereby improving the production efficiency.

Referring to FIG. 4 again, the battery cell 10 further includes an insulating member 4. The insulating member 4 is connected to the bracket 3, and the insulating member 4 and the bracket 3 jointly wrap around a circumferential direction of the electrode assembly 2. The insulating member 4 may be configured to isolate an electrical connection component inside the housing 11 from the housing 11, to reduce a risk of a short circuit. For example, the insulating member 4 may be made of plastic, rubber, or the like. The insulating member 4 and the bracket 3 may be connected through bonding, or may be connected through hot-melting. Certainly, the insulating member 4 and the bracket 3 may alternatively be connected in another manner.

As shown in FIG. 2, according to some embodiments of the present application, the present application further provides a battery 100, including the battery cell 10 according to any one of the foregoing solutions.

In the technical solution of the embodiments of the present application, the foregoing battery cell 10 may be used, to reduce a risk that the battery cell 10 burns and explodes, and reduce an impact on an adjacent battery cell 10, thereby helping improve use reliability and stability of the battery 100.

**As** shown in FIG. 1, according to some embodiments of the present application, the present application further provides a power consuming apparatus 1000, including a battery cell 10 according to any one of the foregoing solutions or a battery 100 according to the foregoing solution. The battery 100 is configured to provide electric energy for the power consuming apparatus 1000. The power consuming apparatus 1000 may be any one of the foregoing devices or systems in which the battery 100 is used.

In the technical solution of the embodiments of the present application, the foregoing battery 100 is used, to help improve use reliability and stability of the power consuming apparatus 1000.

Referring to FIG. 3 to FIG. 11 again, according to some embodiments of the present application, the present application provides a bracket 3. The bracket 3 is used in the battery cell 10. The battery cell 10 includes a housing 11 and an electrode assembly 2. An explosion-proof valve 6 is arranged on the housing 11, and the electrode assembly 2 is arranged in the housing 11.

The bracket 3 includes a bracket body 31. The bracket body 31 has a first side 311 and a second side 312. The first side 311 and the second side 312 are arranged opposite to each other in a thickness direction of the bracket body 31. An exhaust hole 313 is provided on the bracket body 31, the exhaust hole 313 extends through the first side 311 and the second side 312 of the bracket body 31, and the exhaust hole 313 is configured to be opposite to the explosion-proof valve 6.

The bracket 3 further includes a first abutting portion 321. The first abutting portion 321 is arranged on the first side 311 of the bracket body 31, and the first abutting portion 321 protrudes in a direction away from the second side 312. The first abutting portion 321 is configured to abut against an end portion of the electrode assembly 2, so that the exhaust hole 313 and the end portion of the electrode assembly 2 are spaced away and jointly form a first exhaust channel 302.

In the technical solution of this embodiment of the present application, the first abutting portion 321 is arranged on the first side 311 of the bracket body 31, and the first abutting portion 321 abuts against the end portion of the electrode assembly 2. This can increase a distance between the first side 311 of the bracket body 31 and the end portion of the electrode assembly 2, that is, increase a distance between the exhaust hole 313 and the end portion of the electrode assembly 2, so that the first exhaust channel 302 in communication with the exhaust hole 313 is defined between the first side 311 of the bracket body 31 and the end portion of the electrode assembly 2, to improve an exhaustion capability. When thermal runaway tends to occur in the battery cell 10, generated gas may first enter the first exhaust channel 302, then pass through the bracket 3 through the exhaust hole 313, and finally may be discharged from the explosion-proof valve 6, to implement rapid pressure relief, so that a risk that the battery cell 10 burns and explodes can be reduced, and an impact on an adjacent battery cell 10 can be reduced, thereby helping improve use reliability and stability of the battery 100.

In some embodiments, a gas passage gap 315 that extends through the first side 311 and the second side 312 is provided in a circumferential direction of the bracket 3, and the bracket 3 may match the housing 11 of the battery cell 10, so that the gas passage gap 315 and the housing 11 jointly form a gas passage channel 301, and the gas passage channel 301 is in communication with the first exhaust channel 302.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas may be finally discharged from the explosion-proof valve 6, to implement rapid pressure relief.

In the technical solution, the gas passage gap 315 is provided on the bracket 3, and the gas passage gap 315 and the housing 11 may define the gas passage channel 301, so that gas generated in a circumferential direction of the electrode assembly 2 can move to a position of the explosion-proof valve 6 through a gas passage channel 301 at a corresponding position in a short time, to improve timeliness of pressure relief of the explosion-proof valve 6. In addition, the gas in the first exhaust channel 302 may flow to the exhaust hole 313 and the gas passage channel 301 respectively in a short time, to implement instantaneous pressure relief, and finally may be discharged from the explosion-proof valve 6, to implement final pressure relief, so as to further reduce the risk that the battery cell 10 burns and explodes and improve the use reliability and stability of the battery 100. Moreover, during injection, an electrolyte solution may flow to the electrode assembly 2 through the gas passage gap 315, to shorten infiltration time and improve infiltration efficiency.

In some embodiments, a first extending portion 331 further protrudes on the first side 311 of the bracket body 31, the first extending portion 331 is arranged around a circumferential direction of the bracket body 31 and defines a matching groove 30 with the bracket body 31, and the matching groove 30 is configured to match the end portion of the electrode assembly 2.

After the bracket 3 and the electrode assembly 2 may be assembled together, the bracket 3 and the electrode assembly 2 are mounted into the housing 11 together. Alternatively, the bracket 3 may be first pre-mounted into the housing 11, then the electrode assembly 2 is mounted into the housing 11, and the electrode assembly 2 matches the bracket 3.

In an embodiment in which the bracket 3 and the electrode assembly 2 are mounted into the housing 11 together after being assembled, in a process of mounting into the housing, the first extending portion 331 may protect the electrode assembly 2, to reduce a probability that the electrode assembly 2 touches the housing 11, so that occurrence of a phenomenon that the electrode assembly 2 is scratched by the housing 11 is further reduced, to reduce a possibility that an active material of the electrode assembly 2 falls off, avoid an internal short circuit caused by overlapping of the fallen-off active material and an electrode plate with an opposite polarity to a certain extent, avoid corrosion and penetration of the housing 11 caused by a chemical reaction between the fallen-off active material and the housing 11 to a certain extent, and improve use reliability of the battery cell 10. In addition, the first extending portion 331 may be engaged with the electrode assembly 2, to avoid falling off of the bracket 3 before being mounted into the housing to a certain extent, and improve a product yield of the battery cell 10. After the bracket 3 and the electrode assembly 2 are mounted into the housing, the first extending portion 331 may restrict one end of the electrode assembly 2, so that a probability that an outer layer of an active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of the phenomenon that the electrode assembly 2 is scratched by the housing 11 is reduced, and the use reliability of the battery cell 10 is improved.

In an embodiment in which the bracket 3 is first pre-mounted into the housing 11, and then the electrode assembly 2 is mounted into the housing 11, the first extending portion 331 may restrict one end of the electrode assembly 2, so that a probability that an outer layer of an active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of a phenomenon that the electrode assembly 2 is scratched by the housing 11 is reduced, and use reliability of the battery cell 10 is improved.

In the technical solution, the first extending portion 331 may be arranged, to restrict one end of the electrode assembly 2, so that a probability that an outer layer of an active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of a phenomenon that the electrode assembly 2 is scratched by the housing 11 is reduced, and use reliability of the battery cell 10 is improved.

In addition, because the end portion of the electrode assembly 2 extends into the matching groove 30, a distance between the bracket 3 and the end portion of the electrode assembly 2 can be reduced, and energy density of the battery can be improved.

In some embodiments, the first extending portion 331 and the first abutting portion 321 are spaced away, and jointly form a first flow guide channel 304, and the first flow guide channel 304 is configured to be in communication with at least one gas passage channel 301 and the first exhaust channel 302.

The first flow guide channel 304 may increase a space occupied by an exhaust path, to help improve the exhaustion capability, and may also play a guiding function, so that the part of the gas entering the first exhaust channel 302 may flow to the gas passage channel 301 along the first flow guide channel 304, and the gas passes through the bracket 3 through the gas passage channel 301 and finally may be discharged from the explosion-proof valve 6, to implement pressure relief, so as to further reduce the risk that the battery cell 10 burns and explodes and improve the use reliability and stability of the battery 100. In addition, the first flow guide channel 304 may guide flow of the electrolyte solution, to further shorten the infiltration time and greatly improve the infiltration efficiency.

In a length direction of the bracket 3, there are a plurality of gas passage gaps 315 on both sides of the exhaust hole 313, and a plurality of gas passage gaps 315 located on a same side of the exhaust hole 313 share one first flow guide channel 304.

In other words, the plurality of gas passage gaps 315 may be divided into two parts, and the two parts of gas passage gaps 315 are respectively located on two sides of the exhaust hole 313 in a length direction of the battery cell 10. Correspondingly, there are two first flow guide channels 304, and the two first flow guide channels 304 are respectively located on the two sides of the exhaust hole 313 in the length direction of the battery cell 10. In the length direction of the battery cell 10, the first flow guide channel 304 located on one side of the exhaust hole 313 is in communication with a plurality of gas passage gaps 315 at a corresponding position, so that the first flow guide channel 304 is in communication with a plurality of gas passage channels 301 at the corresponding position, and the first flow guide channel 304 located on the other side of the exhaust hole 313 is in communication with a plurality of gas passage gaps 315 at a corresponding position, so that the first flow guide channel 304 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may be divided through the two first flow guide channels 304, then pass through the bracket 3 through the plurality of gas passage channels 301, and flow to the second side 312 of the bracket body 31, and the gas may be finally discharged from the explosion-proof valve 6, to implement rapid pressure relief.

In the technical solution, the gas entering the first exhaust channel 302 may flow to two sides of the exhaust hole 313 in the length direction of the battery cell 10 under the guidance of the two first flow guide channels 304, to implement instantaneous pressure relief, then pass through the bracket 3 through the plurality of gas passage channels 301, and finally may be discharged from the explosion-proof valve 6, to implement final pressure relief, so as to further reduce the risk that the battery cell 10 burns and explodes and improve the use reliability and stability of the battery 100. During injection, the electrolyte solution may flow under the guidance of the two first flow guide channels 304, to shorten the infiltration time and improve the infiltration efficiency.

Referring to FIG. 8 and FIG. 9 again, the first abutting portion 321 is arranged in an arc shape, so that the first abutting portion 321 and the first extending portion 331 define the first flow guide channel 304 in an arc shape.

There are two first abutting portions 321, and the two first abutting portions 321 are respectively located on two sides of the exhaust hole 313. The plurality of gas passage gaps 315 located on the same side of the exhaust hole 313 are provided at intervals around a circumferential direction of a corresponding first abutting portion 321, so that the plurality of gas passage gaps 315 located on the same side of the exhaust hole 313 are arranged in an extending direction of a corresponding first flow guide channel 304. In this way, a plurality of gas passage channels 301 are all in communication with the same first flow guide channel 304, and the gas at the first exhaust channel 302 flows in all directions of the first exhaust channel 302 under the guidance of the two first flow guide channels 304, passes through the bracket 3 through the plurality of gas passage channels 301, and finally may be discharged from the explosion-proof valve 6.

Therefore, in the technical solution, the first abutting portion 321 is arranged in the arc shape, the plurality of gas passage gaps 315 located on the same side of the exhaust hole 313 are provided at intervals around the circumferential direction of the corresponding first abutting portion 321, and the first flow guide channel 304 arranged in the arc shape may be defined, to increase a space occupied by the first flow guide channel 304, improve the space utilization of the bracket 3, and further improve the exhaustion capability. In addition, the infiltration time can be further shortened, and the infiltration efficiency can be further improved.

Referring to FIG. 3 and FIG. 4, and FIG. 7 and FIG. 8, two through holes 314 are provided on the bracket body 31 and are configured to expose a positive terminal 1201 and a negative terminal 1202 of the battery cell 10. The exhaust hole 313 is located between the two through holes 314, the two first abutting portions 321 are arranged in one-to-one correspondence with the two through holes 314, and each first abutting portion 321 is arranged around an outer periphery of a corresponding through hole 314.

In the technical solution, the first abutting portion 321 and the first extending portion 331 may define the first flow guide channel 304 arranged in the arc shape, to increase the space occupied by the first flow guide channel 304, improve the space utilization of the bracket 3, and also improve the exhaustion capability. In addition, the first abutting portion 321 is arranged around the through hole 314, and may guide gas at the through hole 314 to flow to the first exhaust channel 302, so that the part of gas may pass through the bracket 3 through the exhaust hole 313 as much as possible, to further improve the exhaustion capability.

Referring to FIG. 10 and FIG. 11 again, the bracket 3 further includes a second abutting portion 322. The second abutting portion 322 is arranged on the second side 312 of the bracket body 31, and the second abutting portion 322 protrudes in a direction away from the first side 311. The second abutting portion 322 is configured to abut against a wall of the housing 11 on which the explosion-proof valve 6 is arranged. The exhaust hole 313 and the wall jointly form a second exhaust channel 303, and the second exhaust channel 303 is in communication with at least one gas passage channel 301.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas finally gathers in the second exhaust channel 303 and is discharged from the explosion-proof valve 6, to implement rapid pressure relief.

In the technical solution, the second abutting portion 322 is arranged on the second side 312 of the bracket body 31, and the second abutting portion 322 abuts against the wall of the housing 11 on which the explosion-proof valve 6 is arranged, so that the second exhaust channel 303 is defined between the second side 312 of the bracket body 31 and the wall of the housing 11, to increase the space occupied by the exhaust path, improve the exhaustion capability, reduce the risk that the battery cell 10 burns and explodes, reduce the impact on the adjacent battery cell 10, and help improve the use reliability and stability of the battery 100.

Referring to FIG. 10 and FIG. 11 again, a second extending portion 332 further protrudes on the second side 312 of the bracket body 31, the second extending portion 332 and the second abutting portion 322 are spaced away, and jointly form a second flow guide channel 305, and the second flow guide channel 305 is configured to be in communication with at least one gas passage channel 301 and the second exhaust channel 303.

The second flow guide channel 305 may increase the space occupied by the exhaust path, to help improve the exhaustion capability, and may also play a guiding function, so that the part of the gas passing through the bracket 3 through the gas passage channel 301 may flow to the second exhaust channel 303 along the second flow guide channel 305 and finally may be discharged from the explosion-proof valve 6, to implement pressure relief, so as to further reduce the risk that the battery cell 10 burns and explodes and improve the use reliability and stability of the battery 100. In addition, the second flow guide channel 305 may guide flow of the electrolyte solution, to further shorten the infiltration time and greatly improve the infiltration efficiency.

In the length direction of the bracket 3, there are a plurality of gas passage gaps 315 on both sides of the exhaust hole 313, and a plurality of gas passage gaps 315 located on a same side of the exhaust hole 313 share one second flow guide channel 305.

In other words, the plurality of gas passage gaps 315 may be divided into two parts, and the two parts of gas passage gaps 315 are respectively located on two sides of the exhaust hole 313 in a length direction of the battery cell 10. Correspondingly, there are two second flow guide channels 305, and the two second flow guide channels 305 are respectively located on the two sides of the exhaust hole 313 in the length direction of the battery cell 10. In the length direction of the battery cell 10, the second flow guide channel 305 located on one side of the exhaust hole 313 is in communication with a plurality of gas passage gaps 315 at a corresponding position, so that the second flow guide channel 305 is in communication with a plurality of gas passage channels 301 at the corresponding position, and the second flow guide channel 305 located on the other side of the exhaust hole 313 is in communication with a plurality of gas passage gaps 315 at a corresponding position, so that the second flow guide channel 305 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may pass through the bracket 3 through the plurality of gas passage channels 301, flow to the second side 312 of the bracket body 31, and then flow along the second flow guide channel 305, and the gas finally gathers in the second exhaust channel 303, and is discharged from the explosion-proof valve 6, to implement rapid pressure relief.

During injection, the electrolyte solution may flow to the plurality of gas passage gaps 315 along the second flow guide channel 305, and the electrolyte solution passing through the gas passage gaps 315 may first flow along the second flow guide channel 304, and then flow to the electrode assembly 2, or may directly flow to the electrode assembly 2, to shorten the infiltration time of the electrolyte solution and improve the infiltration efficiency.

In the technical solution, the gas passing through the bracket 3 may flow to the second exhaust channel 303 under the guidance of the second flow guide channel 305, and finally may be discharged from the explosion-proof valve 6, to implement final pressure relief, so as to further reduce the risk that the battery cell 10 burns and explodes and improve the use reliability and stability of the battery 100. The electrolyte solution may flow to the plurality of gas passage gaps 315 under the guidance of the second flow guide channel 305, to shorten the infiltration time and improve the infiltration efficiency.

In some embodiments, the second abutting portion 322 is arranged in an arc shape, so that the second abutting portion 322 and the second extending portion 332 define the second flow guide channel 305 in an are shape.

There are two second abutting portions 322, and the two second abutting portions 322 are respectively located on two sides of the exhaust hole 313. The plurality of gas passage gaps 315 located on the same side of the exhaust hole 313 are provided at intervals around a circumferential direction of a second abutting portion 322, so that the plurality of gas passage gaps 315 located on the same side of the exhaust hole 313 are arranged in an extending direction of a corresponding second flow guide channel 305. In this way, a plurality of gas passage channels 301 are all in communication with the same second flow guide channel 305, and gas flowing out of the plurality of gas passage channels 301 gathers in the second exhaust channel 303 under the guidance of the second flow guide channel 305, and finally may be discharged from the explosion-proof valve 6.

Therefore, in the technical solution, the second abutting portion 322 is arranged in the arc shape, the plurality of gas passage gaps 315 located on the same side of the exhaust hole 313 are provided at intervals around the circumferential direction of the corresponding second abutting portion 322, and the second flow guide channel 305 arranged in the arc shape may be defined, to increase a space occupied by the second flow guide channel 305, improve the space utilization of the bracket 3, and further improve the exhaustion capability. In addition, the infiltration time can be further shortened, and the infiltration efficiency can be further improved.

Referring to FIG. 3 and FIG. 4, and FIG. 10 and FIG. 11, a positive terminal 1201 and a negative terminal 1202 are further arranged on a wall of the housing 11 on which the explosion-proof valve 6 is arranged. Two through holes 314 are provided on the bracket body 31, the two through holes 314 are configured to expose the positive terminal 1201 and the negative terminal 1202, and the exhaust hole 313 is located between the two through holes 314. The two second abutting portions 322 are arranged in one-to-one correspondence with the two through holes 314, and each second abutting portion 322 is arranged around an outer periphery of a corresponding through hole 314.

In the technical solution, the second abutting portion 322 and the second extending portion 332 may define the second flow guide channel 305 arranged in an arc shape, to increase the space occupied by the second flow guide channel 305, improve the space utilization of the bracket 3, and also improve the exhaustion capability. In addition, the second abutting portion 322 is arranged around the through hole 314, to reduce backflow of gas from the through hole 314.

Finally, it should be noted that the foregoing embodiments are merely used for describing the technical solutions of the present application, but are not intended to limit the present application. Although the present application is described in detail with reference to the foregoing embodiments, a person of ordinary skill in the art should understand that, modifications may still be made to the technical solutions in the foregoing embodiments, or equivalent replacements may be made to some or all of the technical features; These modifications or substitutions do not depart the essence of the corresponding technical solution from the scope of the technical solution of each embodiment of the present application, and should be covered in the scope of the claims and descriptions of the present application. In particular, as long as there is no structural conflict, each technical feature mentioned in each embodiment can be combined in any manner. The present application is not limited to the specific embodiments disclosed herein, but includes all technical solutions falling within the scope of the claims.

## Claims

1. A battery cell (10), comprising:
a housing (11), provided with an explosion-proof valve (6);
an electrode assembly (2), arranged in the housing (11); and
a bracket (3), comprising a bracket body (31) and a first abutting portion (321), wherein the bracket body (31) has a first side (311) and a second side (312) that are arranged opposite to each other in a thickness direction of the bracket body (31), an exhaust hole (313) that extends through the first side (311) and the second side (312) is provided on the bracket body (31), and the exhaust hole (313) is configured to be opposite to the explosion-proof valve (6); and the first abutting portion (321) is arranged on the first side (311) and protrudes in a direction away from the second side (312), and is configured to abut against an end portion of the electrode assembly (2), so that the exhaust hole (313) and the end portion of the electrode assembly (2) jointly form a first exhaust channel (302).

2. The battery cell (10) according to claim 1, wherein a gas passage gap (315) that extends through the first side (311) and the second side (312) is provided in a circumferential direction of the bracket (3), the gas passage gap (315) and the housing (11) jointly form a gas passage channel (301), and the gas passage channel (301) is in communication with the first exhaust channel (302).

3. The battery cell (10) according to claim 2, wherein a plurality of gas passage gaps (315) arranged at intervals are provided in the circumferential direction of the bracket (3), each gas passage gap (315) and the housing (11) jointly form one gas passage channel (301), and a plurality of gas passage channels (301) are provided around a circumferential direction of the first exhaust channel (302).

4. The battery cell (10) according to claim 2, wherein a first extending portion (331) further protrudes on the first side (311) of the bracket body (31), the first extending portion (331) is arranged around a circumferential direction of the bracket body (31) and defines a matching groove (30) with the bracket body (31), and the end portion of the electrode assembly (2) is arranged in the matching groove (30).

5. The battery cell (10) according to claim 4, wherein the gas passage gap (315) extends through the first extending portion (331) and the bracket body (31).

6. The battery cell (10) according to claim 4, wherein the first extending portion (331) and the first abutting portion (321) are spaced away and jointly form a first flow guide channel (304), and the first flow guide channel (304) is in communication with at least one gas passage channel (301) and the first exhaust channel (302).

7. The battery cell (10) according to claim 6, wherein in a length direction of the battery cell (10), there are a plurality of gas passage gaps (315) on both sides of the exhaust hole (313), and a plurality of gas passage gaps (315) located on a same side of the exhaust hole (313) share one first flow guide channel (304).

8. The battery cell (10) according to claim 7, wherein the first abutting portion (321) is arranged in an arc shape, there are two first abutting portions (321), the two first abutting portions (321) are respectively located on two sides of the exhaust hole (313), and the plurality of gas passage gaps (315) located on the same side of the exhaust hole (313) are provided at intervals around a circumferential direction of a corresponding first abutting portion (321).

9. The battery cell (10) according to claim 8, wherein a positive terminal (1201) and a negative terminal (1202) are further arranged on a wall of the housing (11) on which the explosion-proof valve (6) is arranged, two through holes (314) exposing the positive terminal (1201) and the negative terminal (1202) are provided on the bracket body (31), and the exhaust hole (313) is located between the two through holes (314); and
the two first abutting portions (321) are arranged in one-to-one correspondence with the two through holes (314), and each first abutting portion (321) is arranged around an outer periphery of a corresponding through hole (314).

10. The battery cell (10) according to any one of claims 2 to 9, wherein a second abutting portion (322) protruding in a direction away from the first side (311) is arranged on the second side (312) of the bracket body (31), the second abutting portion (322) is configured to abut against the wall of the housing (11) on which the explosion-proof valve (6) is arranged, and the second abutting portion (322) and the wall jointly form a second exhaust channel (303); and the second exhaust channel (303) is in communication with at least one gas passage channel (301).

11. The battery cell (10) according to claim 10, wherein a second extending portion (332) further protrudes on the second side (312) of the bracket body (31), the second extending portion (332) and the second abutting portion (322) are spaced away and jointly form a second flow guide channel (305), and the second flow guide channel (305) is in communication with at least one gas passage channel (301) and the second exhaust channel (303).

12. The battery cell (10) according to claim 11, wherein in the length direction of the battery cell (10), there are a plurality of gas passage gaps (315) on both sides of the exhaust hole (313), and a plurality of gas passage gaps (315) located on a same side of the exhaust hole (313) share one second flow guide channel (305).

13. The battery cell (10) according to claim 12, wherein the second side (312) has a mounting recessed portion (316) recessed toward the first side (311), the second exhaust channel (303) is defined between the mounting recessed portion (316) and the wall of the housing (11) on which the explosion-proof valve (6) is arranged, and the exhaust hole (313) is provided on a bottom wall of the mounting recessed portion (316).

14. The battery cell (10) according to claim 13, wherein a gas passage hole (317) is provided on a side wall of the mounting recessed portion (316), and the gas passage hole (317) is in communication with the second flow guide channel (305) and the second exhaust channel (303).

15. The battery cell (10) according to claim 12, wherein the second abutting portion (322) is arranged in an arc shape, there are two second abutting portions (322), the two second abutting portions (321) are respectively located on two sides of the exhaust hole (313), and the plurality of gas passage gaps (315) located on the same side of the exhaust hole (313) are provided at intervals around a circumferential direction of a corresponding second abutting portion (322).

16. The battery cell (10) according to claim 15, wherein a positive terminal (1201) and a negative terminal (1202) are further arranged on a wall that the housing (11) on which the explosion-proof valve (6) is arranged, two through holes (314) exposing the positive terminal (1201) and the negative terminal (1202) are provided on the bracket body (31), and the exhaust hole (313) is located between the two through holes (314); and
the two second abutting portions (322) are arranged in one-to-one correspondence with the two through holes (314), and each second abutting portion (322) is arranged around an outer periphery of a corresponding through hole (314).

17. The battery cell (10) according to claim 9 or 16, wherein a positioning groove is provided on a hole wall of the through hole (314) and is configured to match the positive terminal (1201) or the negative terminal (1202).

18. The battery cell (10) according to any one of claims 2 to 17, wherein there are at least two electrode assemblies (2), the at least two electrode assemblies (2) are stacked, and at least one gas passage gap (315) is arranged opposite to a middle position of two adjacent electrode assemblies (2).

19. The battery cell (10) according to any one of claims 1 to 8, wherein a terminal (12) is further arranged on a wall of the housing (11) on which the explosion-proof valve (6) is arranged, the terminal (12) is at least one of the positive terminal (1201) and the negative terminal (1202), a through hole (314) exposing the terminal (12) is provided on the bracket body (31), and an accommodating portion (121) in communication with the through hole (314) is arranged on the terminal (12); and
the electrode assembly (2) comprises an active material coating portion (21) and a conductive portion (22) connected to the active material coating portion (21), the bracket (3) is supported on an end portion of the active material coating portion (21) on which the conductive portion (22) is arranged, and at least a part of the conductive portion (22) passes through the through hole (314) and then extends into the accommodating portion (121) to connect to the terminal (12).

20. The battery cell (10) according to claim 19, wherein the accommodating portion (121) comprises a first accommodating groove (12110), a surface on a side of the terminal (12) facing the active material coating portion (21) is a terminal inner end surface (122), an opening of the first accommodating groove (12110) is formed on the terminal inner end surface (122), and at least a part of the conductive portion (22) is accommodated in the first accommodating groove (12110).

21. The battery cell (10) according to claim 19, wherein the accommodating portion (121) comprises a second accommodating groove (12120), a surface on a side of the terminal (12) away from the active material coating portion (21) is a terminal outer end surface (123), an opening of the second accommodating groove (12120) is formed on the terminal outer end surface (123), the second accommodating groove (12120) is in communication with an interior of the housing (11) through a via hole (12130), and the conductive portion (22) passes through the via hole (12130) and at least a part of the conductive portion (22) is accommodated in the second accommodating groove (12120).

22. The battery cell (10) according to claim 19, wherein there are two terminals (12), the two terminals (12) are respectively the positive terminal (1201) and the negative terminal (1202), there are two through holes (314), and the two through holes (314) respectively expose the positive terminal (1201) and the negative terminal (1202).

23. The battery cell (10) according to any one of claims 1 to 22, wherein the battery cell (10) further comprises an insulating member (4), the insulating member (4) is connected to the bracket (3), and the insulating member (4) and the bracket (3) jointly wrap around a circumferential direction of the electrode assembly (2).

24. A battery (100), comprising the battery cell (10) according to any one of claims 1 to 23.

25. A power consuming apparatus (1000), comprising the battery cell (10) according to any one of claims 1 to 23; or comprising the battery (100) according to claim 23.

26. A bracket (3), used in a battery cell (10), wherein the battery cell (10) comprises a housing (11) and an electrode assembly (2) arranged in the housing (11), an explosion-proof valve (6) is arranged on the housing (11), and the bracket (3) comprises:
a bracket body (31), having a first side (311) and a second side (312) that are arranged opposite to each other in a thickness direction of the bracket body (31), wherein an exhaust hole (313) that extends through the first side (311) and the second side (312) is provided on the bracket body (31), and the exhaust hole (313) is configured to be opposite to the explosion-proof valve (6); and
a first abutting portion (321), arranged on the first side (311) and protruding in a direction away from the second side (312), and configured to abut against an end portion of the electrode assembly (2), so that the exhaust hole (313) and the end portion of the electrode assembly (2) are spaced away and jointly form a first exhaust channel (302).

27. The bracket (3) according to claim 26, wherein a gas passage gap (315) that extends through the first side (311) and the second side (312) is provided in a circumferential direction of the bracket (3), and the gas passage gap (315) is configured to form a gas passage channel (301) together with the housing (11), so that the gas passage channel (301) is in communication with the first exhaust channel (302).

28. The bracket (3) according to claim 27, wherein a first extending portion (331) further protrudes on the first side (311) of the bracket body (31), the first extending portion (331) is arranged around a circumferential direction of the bracket body (31) and defines a matching groove (30) with the bracket body (31), and the matching groove (30) is configured to match the end portion of the electrode assembly (2).

29. The bracket (3) according to claim 28, wherein the first extending portion (331) and the first abutting portion (321) are spaced away, and jointly form a first flow guide channel (304), and the first flow guide channel (304) is configured to be in communication with at least one gas passage channel (301) and the first exhaust channel (302).

30. The bracket (3) according to claim 29, wherein in a length direction of the bracket (3), there are a plurality of gas passage gaps (315) on both sides of the exhaust hole (313), and a plurality of gas passage gaps (315) located on a same side of the exhaust hole (313) share one first flow guide channel (304).

31. The bracket (3) according to claim 30, wherein the first abutting portion (321) is arranged in an arc shape, there are two first abutting portions (321), the two first abutting portions (321) are respectively located on two sides of the exhaust hole (313), and the plurality of gas passage gaps (315) located on the same side of the exhaust hole (313) are provided at intervals around a circumferential direction of a corresponding first abutting portion (321).

32. The bracket (3) according to claim 31, wherein two through holes (314) are provided on the bracket body (31) and are configured to expose a positive terminal (1201) and a negative terminal (1202) of the battery cell (10); and
the exhaust hole (313) is located between the two through holes (314), the two first abutting portions (321) are arranged in one-to-one correspondence with the two through holes (314), and each first abutting portion (321) is arranged around an outer periphery of a corresponding through hole (314).

33. The bracket (3) according to claim 27, wherein the bracket (3) further comprises:
a second abutting portion (322), arranged on the second side (312) and protruding in a direction away from the first side (311), and configured to abut against a wall of the housing (11) on which the explosion-proof valve (6) is arranged, wherein the exhaust hole (313) and the wall jointly form a second exhaust channel (303); and the second exhaust channel (303) is in communication with at least one gas passage channel (301).

34. The bracket (3) according to claim 33, wherein a second extending portion (332) further protrudes on the second side (312) of the bracket body (31), the second extending portion (332) and the second abutting portion (322) are spaced away, and jointly form a second flow guide channel (305), and the second flow guide channel (305) is configured to be in communication with at least one gas passage channel (301) and the second exhaust channel (303).

35. The bracket (3) according to claim 34, wherein in the length direction of the bracket (3), there are a plurality of gas passage gaps (315) on both sides of the exhaust hole (313), and a plurality of gas passage gaps (315) located on a same side of the exhaust hole (313) share one second flow guide channel (305).

36. The bracket (3) according to claim 35, wherein the second abutting portion (322) is arranged in an arc shape, there are two second abutting portions (322), the two second abutting portions (321) are respectively located on two sides of the exhaust hole (313), and the plurality of gas passage gaps (315) located on the same side of the exhaust hole (313) are provided at intervals around a circumferential direction of the second abutting portion (322).

37. The bracket (3) according to claim 36, wherein a positive terminal (1201) and a negative terminal (1202) are further arranged on a wall of the housing (11) on which the explosion-proof valve (6) is arranged, two through holes (314) exposing the positive terminal (1201) and the negative terminal (1202) are provided on the bracket body (31), and the exhaust hole (313) is located between the two through holes (314); and
the two second abutting portions (322) are arranged in one-to-one correspondence with the two through holes (314), and each second abutting portion (322) is arranged around an outer periphery of a corresponding through hole (314).
